# EUROPEAN PATENT APPLICATION

(11) **EP 4 651 364 A1**
(43) Date of publication of application: **19.11.2025**
(21) Application number: 24766182.0
(22) Date of filing: 10.01.2024
(51) Int. Cl.: H02P 25/30

(54) **POWERTRAIN, CONTROLLER AND HYBRID ELECTRIC VEHICLE**

(30) Priority: 06.03.2023 CN 202310246592
(71) Applicant: Huawei Digital Power Technologies Co., Ltd., Shenzhen, Guangdong 518043 (CN)
(72) Inventor: XU, Yankun, Shenzhen, Guangdong 518043 (CN); ZHANG, Xueliang, Shenzhen, Guangdong 518043 (CN); CHEN, Yue, Shenzhen, Guangdong 518043 (CN)
(74) Representative: Gill Jennings & Every LLP
(86) International application number: PCT/CN2024/071581
(87) International publication number: WO 2024/183459

(57) **Abstract**

This application provides a powertrain, a controller, and a hybrid electric vehicle. The powertrain includes a generator system, an electric drive system, and a bus capacitor. The generator system includes three first bridge arms connected in parallel and a generator. Two ends of each first bridge arm are used to respectively connect to two ends of the bus capacitor. A bridge arm midpoint of each first bridge arm is used to connect to a three-phase winding of the generator. The electric drive system includes three second bridge arms connected in parallel and a motor. Two ends of each second bridge arm are used to respectively connect to the two ends of the bus capacitor. A bridge arm midpoint of each second bridge arm is used to connect to a three-phase winding of the motor. A center tap point of the three-phase winding of the generator and a center tap point of the three-phase winding of the motor are used to connect to one end of a power battery. The other end of the power battery is connected. In implementation of this application, production costs of the powertrain can be reduced.

## Description

This application claims priority to Chinese Patent Application No. 202310246592.4, filed with the China National Intellectual Property Administration on March 6, 2023 and entitled "POWERTRAIN, CONTROLLER, AND HYBRID ELECTRIC VEHICLE", which is incorporated herein by reference in its entirety.

### TECHNICAL FIELD

This application relates to the field of new energy vehicle technologies, and in particular, to a powertrain, a controller, and a hybrid electric vehicle.

### BACKGROUND

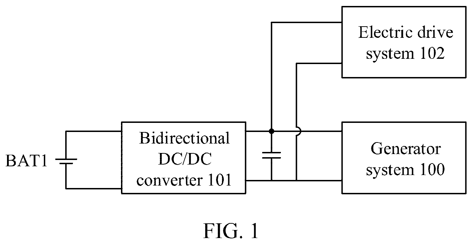

Currently, a powertrain in a hybrid electric vehicle is shown in FIG. 1. To be specific, the powertrain includes a generator system 100, a bidirectional DC/DC converter 101, and an electric drive system 102.

The generator system 100 may charge a power battery BAT1 through the bidirectional DC/DC converter 101. To be specific, a charge circuit of the power battery BAT1 includes the generator system 100 and the bidirectional DC/DC converter 101. Alternatively, the power battery BAT1 discharges to the electric drive system 102 through the bidirectional DC/DC converter 101. To be specific, a discharge circuit of the power battery BAT1 includes the bidirectional DC/DC converter 101 and the electric drive system 102. It can be learned that both charging and discharging of the power battery BAT1 need to be performed through the bidirectional DC/DC converter 101. Therefore, in addition to the generator system 100 and the electric drive system 102, the powertrain of the existing hybrid electric vehicle further includes the bidirectional DC/DC converter 101, leading to high production costs of the powertrain.

### SUMMARY

This application provides a powertrain, a controller, and a hybrid electric vehicle, to reduce production costs of a powertrain.

According to a first aspect, an embodiment of this application provides a powertrain. The powertrain includes a generator system, an electric drive system, and a bus capacitor. A first end and a second end of the generator system are respectively connected to two ends of the bus capacitor, a third end of the generator system is connected to one end of a power battery, and the other end of the power battery is connected to one end of the bus capacitor. A first end and a second end of the electric drive system are respectively connected to the two ends of the bus capacitor, and a third end of the electric drive system is connected to the third end of the generator system.

During specific implementation, the generator system includes three first bridge arms connected in parallel and a generator, two ends of each first bridge arm are respectively connected to the two ends of the bus capacitor, and a bridge arm midpoint of each first bridge arm is connected to a three-phase winding of the generator. The electric drive system includes three second bridge arms connected in parallel and a motor, two ends of each second bridge arm are respectively connected to the two ends of the bus capacitor, and a bridge arm midpoint of each second bridge arm is connected to a three-phase winding of the motor. In addition, a center tap point of the three-phase winding of the generator and a center tap point of the three-phase winding of the motor are connected to one end of the power battery, and the other end of the power battery is connected to the bus capacitor.

In this embodiment of this application, when the powertrain is in a generator system reuse mode, the generator system provides a charge circuit or a discharge circuit for the power battery; or when the powertrain is in an electric drive system reuse mode, the electric drive system provides a charge circuit or a discharge circuit for the power battery. A difference from the conventional technology in which a power battery is connected to a dedicated bidirectional DC/DC converter lies in that, in this embodiment of this application, the power battery is connected to both the center tap point of the three-phase winding of the generator and the center tap point of the three-phase winding of the motor, and the generator system or the electric drive system is reused to charge/discharge the power battery. That is, this embodiment of this application provides a new powertrain structure, to omit a bidirectional DC/DC converter for charging/discharging a power battery, and reduce production costs of a powertrain.

With reference to the first aspect, in a first possible implementation, the powertrain controls, based on at least one of temperature of the generator system and temperature of the electric drive system, the powertrain to be in the generator system reuse mode or the electric drive system reuse mode. In this embodiment of this application, the powertrain may support the generator system reuse mode and the electric drive system reuse mode. For example, when the powertrain is in the generator system reuse mode, the charge circuit or the discharge circuit of the power battery is provided by the three first bridge arms connected in parallel and the generator; or when the powertrain is in the electric drive system reuse mode, the charge circuit or the discharge circuit of the power battery is provided by the three second bridge arms connected in parallel and the motor. Compared with a powertrain in which only a generator system or an electric drive system can be reused, the powertrain in this embodiment of this application may control, based on at least one of the temperature of the generator system and the temperature of the electric drive system, the powertrain to be in the generator system reuse mode or the electric drive system mode, to achieve a heat balance of the powertrain.

With reference to the first possible implementation of the first aspect, in a second possible implementation, when the temperature of the generator system is greater than first preset temperature, the powertrain is in the electric drive system reuse mode. During specific implementation, the powertrain controls an upper switching transistor and a lower switching transistor in each second bridge arm to be turned off or alternately turned on, to control a current of the three-phase winding of the motor to include a drive current of the motor and a charge/discharge current of the power battery.

With reference to the second possible implementation of the first aspect, in a third possible implementation, when the temperature of the generator system is greater than the first preset temperature, if remaining power of the power battery is greater than or equal to first preset power, the electric drive system receives a first discharge reuse control signal, the generator system receives a first power generation control signal, and the powertrain is in an electric drive system discharge reuse mode of the electric drive system reuse mode. In the electric drive system discharge reuse mode, the generator system generates power, the power battery discharges through the electric drive system, a first bus voltage is output between a positive bus and a negative bus, and the electric drive system drives a vehicle based on the first bus voltage. During specific implementation, the powertrain controls each second bridge arm and each first bridge arm to act. In this case, the powertrain controls the upper switching transistor and the lower switching transistor in each second bridge arm to be turned off or alternately turned on, to control the current of the three-phase winding of the motor to include the drive current of the motor and the discharge current of the power battery; and the powertrain controls an upper switching transistor and a lower switching transistor in each first bridge arm to be turned off or alternately turned on, to control a current of the three-phase winding of the generator to include a power generation current of the generator.

With reference to the second possible implementation of the first aspect or the third possible implementation of the first aspect, in a fourth possible implementation, when the temperature of the generator system is greater than the first preset temperature and a vehicle speed increases to a preset speed threshold, if the remaining power of the power battery is greater than or equal to the first preset power, the electric drive system receives the first discharge reuse control signal, the generator system receives the first power generation control signal, and the powertrain is in the electric drive system discharge reuse mode. During specific implementation, the powertrain controls each second bridge arm and each first bridge arm to act. In this case, the powertrain controls the upper switching transistor and the lower switching transistor in each second bridge arm to be turned off or alternately turned on, to control the current of the three-phase winding of the motor to include the drive current of the motor and the discharge current of the power battery; and the powertrain controls the upper switching transistor and the lower switching transistor in each first bridge arm to be turned off or alternately turned on, to control the current of the three-phase winding of the generator to include the power generation current of the generator.

With reference to the second possible implementation of the first aspect or the third possible implementation of the first aspect, in a fifth possible implementation, when the temperature of the generator system is greater than the first preset temperature, if the remaining power of the power battery is less than second preset power, the electric drive system receives a first charge reuse control signal, the generator system receives a second discharge control signal, and the powertrain is in an electric drive system charge reuse mode of the electric drive system reuse mode. In the electric drive system charge reuse mode, the generator system outputs a second bus voltage between the positive bus and the negative bus, and the electric drive system drives the vehicle and charges the power battery based on the second bus voltage. During specific implementation, the powertrain controls each second bridge arm and each first bridge arm to act. In this case, the powertrain controls the upper switching transistor and the lower switching transistor in each second bridge arm to be turned off or alternately turned on, to control the current of the three-phase winding of the motor to include the drive current of the motor and the charge current of the power battery; and the powertrain controls the upper switching transistor and the lower switching transistor in each first bridge arm to be turned off or alternately turned on, to control the current of the three-phase winding of the generator to include the power generation current of the generator.

With reference to the first possible implementation of the first aspect to the fifth possible implementation of the first aspect, in a sixth possible implementation, when the temperature of the electric drive system is greater than second preset temperature, the powertrain is in the generator system reuse mode. During specific implementation, the powertrain controls the upper switching transistor and the lower switching transistor in each first bridge arm to be turned off or alternately turned on, to control the current of the three-phase winding of the generator to include the power generation current of the generator and the charge/discharge current of the power battery.

With reference to the sixth possible implementation of the first aspect, in a seventh possible implementation, when the temperature of the electric drive system is greater than the second preset temperature, if the remaining power of the power battery is greater than or equal to the first preset power, the electric drive system receives a first drive control signal, the generator system receives a second discharge reuse control signal, and the powertrain is in a generator system discharge reuse mode of the generator system reuse mode. In the generator system discharge reuse mode, the generator system generates power, the power battery discharges through the generator system, a third bus voltage is output between the positive bus and the negative bus, and the electric drive system drives the vehicle based on the third bus voltage. During specific implementation, a controller controls each second bridge arm and each first bridge arm to act. In this case, the powertrain controls the upper switching transistor and the lower switching transistor in each second bridge arm to be turned off or alternately turned on, to control the current of the three-phase winding of the motor to include the drive current of the motor; and the powertrain controls the upper switching transistor and the lower switching transistor in each first bridge arm to be turned off or alternately turned on, to control the current of the three-phase winding of the generator to include the power generation current of the generator and the discharge current of the power battery.

With reference to the sixth possible implementation of the first aspect or the seventh possible implementation of the first aspect, in an eighth possible implementation, when the temperature of the electric drive system is greater than the second preset temperature and the vehicle speed increases to the preset speed threshold, if the remaining power of the power battery is greater than or equal to the first preset power, the electric drive system receives the first drive control signal, the generator system receives the second discharge reuse control signal, and the powertrain is in the generator system discharge reuse mode of the generator system reuse mode. During specific implementation, the powertrain controls each second bridge arm and each first bridge arm to act. In this case, the powertrain controls the upper switching transistor and the lower switching transistor in each second bridge arm to be turned off or alternately turned on, to control the current of the three-phase winding of the motor to include the drive current of the motor; and the powertrain controls the upper switching transistor and the lower switching transistor in each first bridge arm to be turned off or alternately turned on, to control the current of the three-phase winding of the generator to include the power generation current of the generator and the discharge current of the power battery.

With reference to the sixth possible implementation of the first aspect or the seventh possible implementation of the first aspect, in a ninth possible implementation, when the temperature of the electric drive system is greater than the second preset temperature, if the remaining power of the power battery is less than the second preset power, the electric drive system receives a second drive control signal, the generator system receives a second charge reuse control signal, and the powertrain is in a generator system charge reuse mode of the generator system reuse mode. In the generator system charge reuse mode, the generator system generates power, the generator system charges the power battery, a fourth bus voltage is output between the positive bus and the negative bus, and the electric drive system drives the vehicle based on the fourth bus voltage. During specific implementation, the controller controls each second bridge arm and each first bridge arm to act. In this case, the powertrain controls the upper switching transistor and the lower switching transistor in each second bridge arm to be turned off or alternately turned on, to control the current of the three-phase winding of the motor to include the drive current of the motor; and the powertrain controls the upper switching transistor and the lower switching transistor in each first bridge arm to be turned off or alternately turned on, to control the current of the three-phase winding of the generator to include the power generation current of the generator and the charge current of the power battery.

With reference to any one of the first aspect or the possible implementations of the first aspect, in a tenth possible implementation, when the vehicle is in a stationary state, if the remaining power of the power battery is less than third preset power, the powertrain is in a battery charge-only mode. In the battery charge-only mode, the generator system generates power, a fifth bus voltage is obtained between the positive bus and the negative bus, and the electric drive system charges the power battery based on the fifth bus voltage.

According to a second aspect, an embodiment of this application provides a controller for a powertrain. A generator system includes three first bridge arms connected in parallel and a generator, two ends of each first bridge arm are respectively connected to two ends of a bus capacitor, and a bridge arm midpoint of each first bridge arm is connected to a three-phase winding of the generator. An electric drive system includes three second bridge arms connected in parallel and a motor, two ends of each second bridge arm are respectively connected to the two ends of the bus capacitor, and a bridge arm midpoint of each second bridge arm is connected to a three-phase winding of the motor. In addition, a center tap point of the three-phase winding of the generator and a center tap point of the three-phase winding of the motor are connected to one end of a power battery, and the other end of the power battery is connected to the bus capacitor. The controller may control, based on at least one of temperature of the generator system and temperature of the electric drive system, the powertrain to be in a generator system reuse mode or an electric drive system reuse mode.

With reference to the second aspect, in a first possible implementation, when the temperature of the generator system is greater than first preset temperature, the controller controls the powertrain to be in the electric drive system reuse mode. In this case, the controller controls an upper switching transistor and a lower switching transistor in each second bridge arm to be turned off or alternately turned on, to control a current of the three-phase winding of the motor to include a drive current of the motor and a charge/discharge current of the power battery.

With reference to the first possible implementation of the second aspect, in a second possible implementation, when the temperature of the generator system is greater than the first preset temperature, if remaining power of the power battery is greater than or equal to first preset power, the controller sends a first discharge reuse control signal to the electric drive system. To be specific, the controller controls the upper switching transistor and the lower switching transistor in each second bridge arm to be turned off or alternately turned on, to control the current of the three-phase winding of the motor to include the drive current of the motor and the discharge current of the power battery. In addition, the controller sends a first power generation control signal to the generator system. To be specific, the controller controls an upper switching transistor and a lower switching transistor in each first bridge arm to be turned off or alternately turned on, to control a current of the three-phase winding of the generator to include a power generation current of the generator. In this case, the powertrain is in an electric drive system discharge reuse mode of the electric drive system reuse mode.

With reference to the first possible implementation of the second aspect or the second possible implementation of the second aspect, in a third possible implementation, alternatively, when the temperature of the generator system is greater than the first preset temperature and a vehicle speed increases to a preset speed threshold, if the remaining power of the power battery is greater than or equal to the first preset power, the controller may send the first discharge reuse control signal to the electric drive system. To be specific, the controller controls the upper switching transistor and the lower switching transistor in each second bridge arm to be turned off or turned on alternately, to control the current of the three-phase winding of the motor to include the drive current of the motor and the discharge current of the power battery. In addition, the controller sends the first power generation control signal to the generator system. To be specific, the controller controls the upper switching transistor and the lower switching transistor in each first bridge arm to be turned off or alternately turned on, to control the current of the three-phase winding of the generator to include the power generation current of the generator.

With reference to the first possible implementation of the second aspect or the second possible implementation of the second aspect, in a fourth possible implementation, alternatively, when the temperature of the generator system is greater than the first preset temperature, if the remaining power of the power battery is less than second preset power, the controller may send a first charge reuse control signal to the electric drive system. To be specific, the controller controls the upper switching transistor and the lower switching transistor in each second bridge arm to be turned off or alternately turned on, to control the current of the three-phase winding of the motor to include the drive current of the motor and the charge current of the power battery. In addition, the controller sends a second discharge control signal to the generator system. To be specific, the controller controls the upper switching transistor and the lower switching transistor in each first bridge arm to be turned off or alternately turned on, to control the current of the three-phase winding of the generator to include the power generation current of the generator. In this case, the powertrain is in an electric drive system charge reuse mode of the electric drive system reuse mode. In the electric drive system charge reuse mode, the generator system outputs a second bus voltage between a positive bus and a negative bus, and the electric drive system drives a vehicle and charges the power battery based on the second bus voltage.

With reference to any one of the second aspect or the possible implementations of the second aspect, in a fifth possible implementation, the controller controls, based on that temperature of the electric drive system is greater than second preset temperature, the upper switching transistor and the lower switching transistor in each first bridge arm to be turned off or alternately turned on, to control the current of the three-phase winding of the generator to include the power generation current of the generator and the charge/discharge current of the power battery.

With reference to the fifth possible implementation of the second aspect, in a sixth possible implementation, when the temperature of the electric drive system is greater than the second preset temperature, if the remaining power of the power battery is greater than or equal to the first preset power, the controller sends a first drive control signal to the electric drive system, to be specific, controls the upper switching transistor and the lower switching transistor in each second bridge arm to be turned off or alternately turned on, to control the current of the three-phase winding of the motor to include the drive current of the motor. In addition, the controller sends a second discharge reuse control signal to the generator system, to be specific, controls the upper switching transistor and the lower switching transistor in each first bridge arm to be turned off or alternately turned on, to control the current of the three-phase winding of the generator to include the power generation current of the generator and the discharge current of the power battery, to control the powertrain to be in a generator system discharge reuse mode of the generator system reuse mode. In the generator system discharge reuse mode, the generator system generates power, the power battery discharges through the generator system, a third bus voltage is output between the positive bus and the negative bus, and the electric drive system drives the vehicle based on the third bus voltage.

With reference to the fifth possible implementation of the second aspect or the sixth possible implementation of the second aspect, in a seventh possible implementation, when the temperature of the electric drive system is greater than the second preset temperature and the vehicle speed increases to the preset speed threshold, if the remaining power of the power battery is greater than or equal to the first preset power, the controller sends the first drive control signal to the electric drive system, to be specific, controls the upper switching transistor and the lower switching transistor in each second bridge arm to be turned off or alternately turned on, to control the current of the three-phase winding of the motor to include the drive current of the motor. In addition, the controller sends the second discharge reuse control signal to the generator system, to control the upper switching transistor and the lower switching transistor in each first bridge arm to be turned off or alternately turned on, to control the current of the three-phase winding of the generator to include the power generation current of the generator and the discharge current of the power battery.

With reference to the fifth possible implementation of the second aspect or the sixth possible implementation of the second aspect, in an eighth possible implementation, when the temperature of the electric drive system is greater than the second preset temperature, if the remaining power of the power battery is less than the second preset power, the controller sends a second drive control signal to the electric drive system, to be specific, controls the upper switching transistor and the lower switching transistor in each second bridge arm to be turned off or alternately turned on, to control the current of the three-phase winding of the motor to include the drive current of the motor. In addition, the controller sends a second charge reuse control signal to the generator system, to be specific, controls the upper switching transistor and the lower switching transistor in each first bridge arm to be turned off or alternately turned on, to control the current of the three-phase winding of the generator to include the power generation current of the generator and the charge current of the power battery. In this case, the powertrain is in a generator system charge reuse mode of the generator system reuse mode. In the generator system charge reuse mode, the generator system generates power, the generator system charges the power battery, a fourth bus voltage is output between the positive bus and the negative bus, and the electric drive system drives the vehicle based on the fourth bus voltage.

With reference to any one of the second aspect or the possible implementations of the second aspect, in a ninth possible implementation, when the vehicle is in a stationary state, if the remaining power of the power battery is less than third preset power, the powertrain is controlled to be in a battery charge-only mode. In the battery charge-only mode, the generator system generates power, a fifth bus voltage is obtained between the positive bus and the negative bus, and the electric drive system charges the power battery based on the fifth bus voltage.

According to a third aspect, an embodiment of this application provides a hybrid electric vehicle. The hybrid electric vehicle includes a power battery and the powertrain according to any one of the first aspect or the possible implementations of the first aspect. Alternatively, the hybrid electric vehicle includes a power battery, three first bridge arms connected in parallel, a generator connected to the three first bridge arms, three second bridge arms connected in parallel, a motor connected to the three second bridge arms, and the controller according to any one of the first aspect or the possible implementations of the first aspect.

It should be understood that mutual reference may be made between implementations and beneficial effects of the foregoing plurality of aspects of this application.

### BRIEF DESCRIPTION OF DRAWINGS

FIG. 1 is a block diagram of a structure of an existing powertrain;
FIG. 2 is a diagram of a structure of a hybrid electric vehicle according to an embodiment of this application;
FIG. 3 is a block diagram of a structure of a powertrain according to an embodiment of this application;
FIG. 4 is a schematic of a circuit of a powertrain according to an embodiment of this application;
FIG. 5 is a diagram of a control process of a controller according to an embodiment of this application;
FIG. 6 is a diagram of a waveform according to an embodiment of this application;
FIG. 7A and FIG. 7B are diagrams of a circuit state according to an embodiment of this application;
FIG. 8 is a diagram of another waveform according to an embodiment of this application;
FIG. 9A and FIG. 9B are diagrams of another circuit state according to an embodiment of this application;
FIG. 10 is a diagram of still another circuit state according to an embodiment of this application;
FIG. 11 is a diagram of another control process of a controller according to an embodiment of this application;
FIG. 12 is a diagram of a waveform according to an embodiment of this application;
FIG. 13A and FIG. 13B are diagrams of another circuit state according to an embodiment of this application;
FIG. 14 is a diagram of another waveform according to an embodiment of this application;
FIG. 15A and FIG. 15B are diagrams of another circuit state according to an embodiment of this application;
FIG. 16 is a block diagram of another structure of a powertrain according to an embodiment of this application;
FIG. 17 is a schematic of another circuit of a powertrain according to an embodiment of this application;
FIG. 18A and FIG. 18B are diagrams of another circuit state according to an embodiment of this application;
FIG. 19A and FIG. 19B are diagrams of another circuit state according to an embodiment of this application;
FIG. 20A and FIG. 20B are diagrams of another circuit state according to an embodiment of this application; and
FIG. 21A and FIG. 21B are diagrams of another circuit state according to an embodiment of this application.

### DESCRIPTION OF EMBODIMENTS

The following clearly and completely describes the technical solutions in embodiments of this application with reference to the accompanying drawings in embodiments of this application. Clearly, the described embodiments are some but not all of embodiments of this application. All other embodiments obtained by a person of ordinary skill in the art based on embodiments of this application without creative efforts shall fall within the protection scope of this application.

Implementations of the technical solutions of this application are further described below in detail with reference to the accompanying drawings.

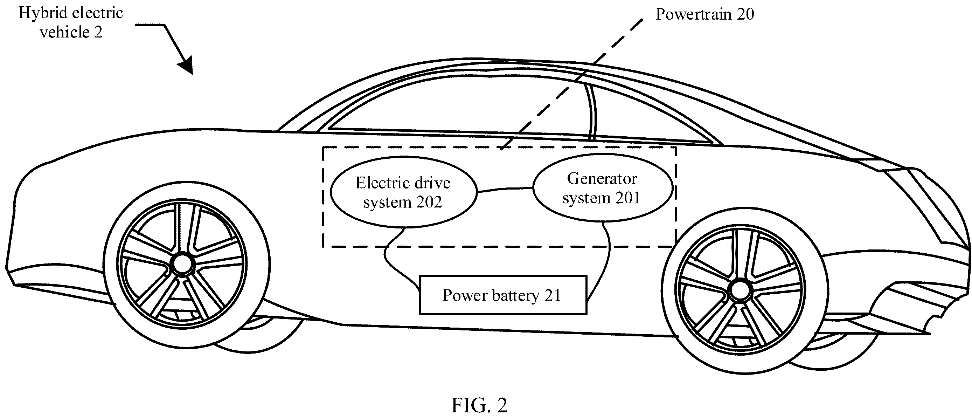

FIG. 2 is a diagram of a structure of a hybrid electric vehicle according to an embodiment of this application. As shown in FIG. 2, the hybrid electric vehicle 2 includes a powertrain 20 and a power battery 21.

The hybrid electric vehicle 2 is a new energy vehicle between a pure electric vehicle and a fuel vehicle. In this embodiment of this application, the powertrain 20 in the hybrid electric vehicle 2 includes not only a generator system 201, but also an electric drive system 202. For example, the hybrid electric vehicle 2 may be specifically understood as a plug-in hybrid electric vehicle (Plug-in hybrid electric vehicle, PHEV).

During specific implementation, the generator system 201 is driven by an internal combustion engine to output a torque, and converts mechanical energy into electric energy when outputting the torque. That is, the generator system 201 generates power. The generator system 201 may transmit the electric energy to the power battery 21, that is, charge the power battery 21. Alternatively, the generator system 201 may transmit the electric energy to the electric drive system 202. To be specific, the generator system 201 provides a drive voltage for the electric drive system 202, so that a motor in the electric drive system 202 rotates (to be specific, the motor outputs a torque), to drive the hybrid electric vehicle 2. Alternatively, the generator system 201 provides the electric energy for the electric drive system 202, and the power battery 21 also discharges to the electric drive system 202. To be specific, both the generator system 201 and the power battery 21 provide a drive voltage for the electric drive system 202, so that the motor outputs a torque.

Embodiments of this application provide a new powertrain structure different from a powertrain structure in the conventional technology. In embodiments of this application, a power battery is connected to a generator system and an electric drive system, and the power battery may be charged/discharged through the generator system or the electric drive system.

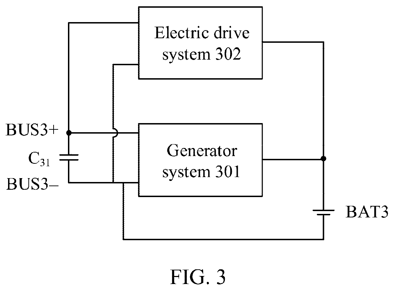

In some feasible implementations, FIG. 3 is a block diagram of a structure of a powertrain according to an embodiment of this application. As shown in FIG. 3, the powertrain provided in this embodiment of this application includes a generator system 301 and an electric drive system 302.

A first end of the generator system 301 is connected to a positive bus BUS3+. A second end of the generator system 301 is connected to a negative bus BUS3-. A third end of the generator system 301 is connected to a positive terminal of a power battery BAT3. A negative terminal of the power battery BAT3 is connected to the negative bus BUS3-.

In addition, the powertrain further includes a bus capacitor unit connected between the positive bus BUS3+ and the negative bus BUS3-. It should be noted that, in this embodiment of this application, an example in which the bus capacitor unit includes one capacitor *C*₃₁ is used. In some feasible implementations, the bus capacitor unit may include at least two capacitors connected in series or in parallel. To be specific, a quantity of capacitors in the bus capacitor unit and a connection manner between capacitors are not limited in this embodiment of this application.

A first end of the electric drive system 302 is connected to the positive bus BUS3+. A second end of the electric drive system 302 is connected to the negative bus BUS3-. A third end of the electric drive system 302 is connected to the third end of the generator system 301. To be specific, the third end of the electric drive system 302 is also connected to the positive terminal of the power battery BAT3.

A difference from the conventional technology in which a power battery is connected to a dedicated bidirectional DC/DC converter lies in that, in this embodiment of this application, the power battery is connected to both the generator system and the electric drive system, and the generator system or the electric drive system is reused to charge/discharge the power battery. That is, this embodiment of this application provides a new powertrain structure, to omit a bidirectional DC/DC converter for charging/discharging a power battery, and reduce production costs of a powertrain.

In addition, the powertrain may support a generator system reuse mode and an electric drive system reuse mode. For example, when the powertrain is in the generator system reuse mode, a charge circuit or a discharge circuit of the power battery is provided by the generator system; or when the powertrain is in the electric drive system reuse mode, a charge circuit or a discharge circuit of the power battery is provided by the electric drive system. Compared with a powertrain in which only a generator system or an electric drive system can be reused, the powertrain in this embodiment of this application may control, based on at least one of the temperature of the generator system and the temperature of the electric drive system, the powertrain to be in the generator system reuse mode or the electric drive system mode, to achieve a heat balance of the powertrain.

For example, temperature of the generator system 301 is greater than first preset temperature, and the powertrain is in the electric drive system reuse mode. The first preset temperature is temperature at which the generator system 301 can operate safely, and the first preset temperature is related to a generator and a generator control unit (Generator Control Unit, GCU) in the generator system 301. This may be understood as that the temperature of the generator system 301 is greater than the safe operation temperature of the generator system 301, and a charge circuit or a discharge circuit of the power battery is provided by the electric drive system 302.

Similarly, when temperature of the electric drive system 302 is greater than second preset temperature, the powertrain is in the generator system reuse mode. The second preset temperature is temperature at which the electric drive system 302 can operate safely, and the second preset temperature is related to a motor and a motor control unit (Motor Control Unit, MCU) in the electric drive system 302. This may be understood as that the temperature of the electric drive system 302 is greater than the safe operation temperature of the electric drive system 302, and a charge circuit or a discharge circuit of the power battery is provided by the generator system 301.

Optionally, in some feasible implementations, if the temperature of the generator system 301 is greater than the first preset temperature and the temperature of the electric drive system 302 is greater than the second preset temperature, the powertrain sorts the generator system 301 and the electric drive system 302 by priority. For example, if a temperature tolerance capability of a component used in the generator system 301 is weaker than a tolerance capability of a component used in the electric drive system 302, the powertrain determines that a priority of the generator system 301 is higher than a priority of the electric drive system 302, and controls the powertrain to be in the electric drive system reuse mode. Alternatively, if a temperature tolerance capability of a component used in the generator system 301 is stronger than a tolerance capability of a component used in the electric drive system 302, the powertrain determines that a priority of the electric drive system 302 is higher than a priority of the generator system 301, and controls the powertrain to be in the generator system reuse mode.

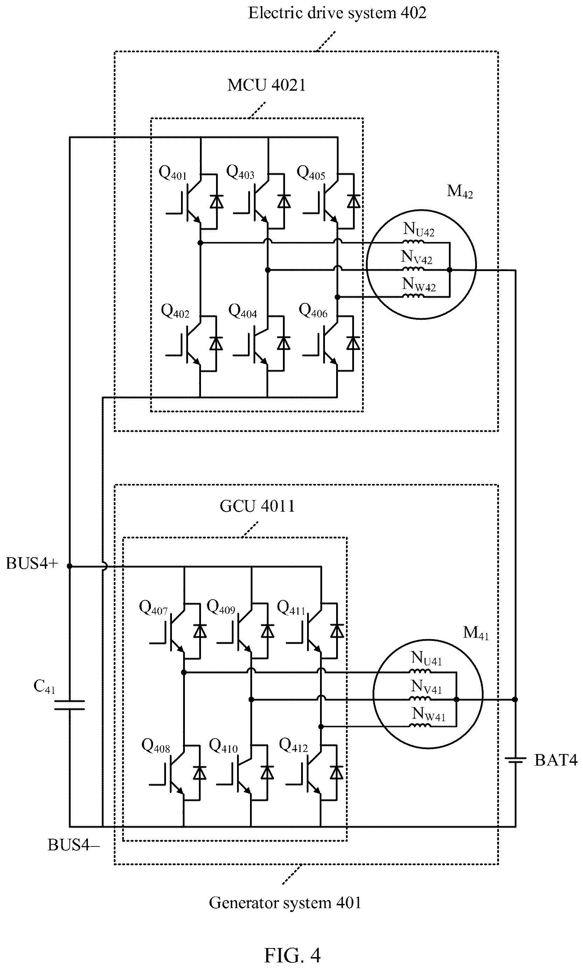

The following describes a specific structure of a powertrain by using an example with reference to FIG. 4.

For example, FIG. 4 is a schematic of a circuit of a powertrain according to an embodiment of this application. As shown in FIG. 4, the powertrain in this embodiment of this application includes a generator system 401, an electric drive system 402, and a bus capacitor (namely, a capacitor *C*₄₁).

The generator system 401 includes a GCU 4011 and a generator *M*₄₁. The electric drive system 402 includes an MCU 4021 and a motor *M*₄₂.

In the generator system 401, the GCU 4011 includes three first bridge arms connected in parallel, and the generator *M*₄₁ includes three generator windings (for example, a generator winding *N*_{*U*41}*,* a generator winding *N*_{*V*41}*,* and a generator winding N_{*W*41}) corresponding to the three first bridge arms. In this case, a collector of an upper switching transistor Q₄₀₇, a collector of an upper switching transistor Q₄₀₉, and a collector of an upper switching transistor *Q*₄₁₁ are a first end of the generator system 401. To be specific, the collector of the upper switching transistor Q₄₀₇, the collector of the upper switching transistor Q₄₀₉, and the collector of the upper switching transistor *Q*₄₁₁ are connected to one end of the capacitor *C*₄₁. An emitter of a lower switching transistor *Q*₄₀₈, an emitter of a lower switching transistor *Q*₄₁₀, and an emitter of a lower switching transistor *Q*₄₁₂ are a second end of the generator system 401. To be specific, the emitter of the lower switching transistor *Q*₄₀₈, the emitter of the lower switching transistor *Q*₄₁₀, and the emitter of the lower switching transistor *Q*₄₁₂ are connected to the other end of the capacitor *C*₄₁. An emitter of the upper switching transistor *Q*₄₀₇ and a collector of the lower switching transistor *Q*₄₀₈ are connected to one end of the generator winding *N*_{*U*41}*.* An emitter of the upper switching transistor *Q*₄₀₉ and a collector of the lower switching transistor *Q*₄₁₀ are connected to one end of the generator winding *N*_{*V*41}*.* An emitter of the upper switching transistor *Q*₄₁₁ and a collector of the lower switching transistor *Q*₄₁₂ are connected to one end of the generator winding N_{*W*41}. The other end of the generator winding *N*_{*U*41}*,* the other end of the generator winding *N*_{*V*41}*,* and the other end of the generator winding *N*_{*W*41} are a third end of the generator system 401, and the third end may also be referred to as a center tap point of a three-phase winding of the generator. In this case, the center tap point of the three-phase winding of the generator is connected to a positive terminal of the power battery BAT4. To be specific, the other end of the generator winding *N*_{*U*41}*,* the other end of the generator winding *N*_{*V*41}*,* and the other end of the generator winding *N*_{*W*41} are connected to the positive terminal of the power battery BAT4, and a negative terminal of the power battery BAT4 is connected to a negative bus BUS4-.

In the electric drive system 402, the MCU 4021 includes three second bridge arms connected in parallel, and the motor *M*₄₂ includes three motor windings (for example, a motor winding *N*_{*U*42}*,* a motor winding *N*_{*V*42}*,* and a motor winding *N*_{*W*42}) corresponding to the three second bridge arms. In this case, a collector of an upper switching transistor *Q*₄₀₁, a collector of an upper switching transistor *Q*₄₀₃, and a collector of an upper switching transistor *Q*₄₀₅ are a first end of the electric drive system 402. To be specific, the collector of the upper switching transistor *Q*₄₀₁, the collector of the upper switching transistor *Q*₄₀₃, and the collector of the upper switching transistor *Q*₄₀₅ are connected to one end of the capacitor *C*₄₁. An emitter of a lower switching transistor *Q*₄₀₂, an emitter of a lower switching transistor *Q*₄₀₄, and an emitter of a lower switching transistor *Q*₄₀₆ are a second end of the electric drive system 402. To be specific, the emitter of the lower switching transistor *Q*₄₀₂, the emitter of the lower switching transistor *Q*₄₀₄, and the emitter of the lower switching transistor *Q*₄₀₆ are connected to the other end of the capacitor *C*₄₁. An emitter of the upper switching transistor *Q*₄₀₁ and a collector of the lower switching transistor *Q*₄₀₂ are connected to one end of the motor winding *N*_{*U*42}*.* An emitter of the upper switching transistor *Q*₄₀₃ and a collector of the lower switching transistor *Q*₄₀₄ are connected to one end of the motor winding *N*_{*V*42}*.* An emitter of the upper switching transistor *Q*₄₀₅ and a collector of the lower switching transistor *Q*₄₀₆ are connected to one end of the motor winding *N*_{*W*42}. The other end of the motor winding *N*_{*U*42}*,* the other end of the motor winding *N*_{*V*42}*,* and the other end of the motor winding *N*_{*W*42} are a third end of the electric drive system 402, and the third end may also be referred to as a center tap point of a three-phase winding of the motor. In this case, the center tap point of the three-phase winding of the motor is connected to the positive terminal of the power battery BAT4. To be specific, the other end of the motor winding *N*_{*U*42}*,* the other end of the motor winding *N*_{*V*42}*,* and the other end of the motor winding *N*_{*W*42} are connected to the positive terminal of the power battery BAT4.

It should be noted that, in FIG. 4, an example in which the generator *M*₄₁ is specifically implemented as a three-phase alternating-current generator and the motor *M*₄₂ is specifically implemented as a three-phase alternating-current motor is used. In some feasible implementations, the generator in the generator system may be a two-phase alternating-current generator, a four-phase alternating-current generator, a five-phase alternating-current generator, or the like. In this case, the GCU adaptively changes a quantity of bridge arms based on a quantity of generator windings in different types of generators. For example, when the generator is a two-phase alternating-current generator, the GCU includes two-phase bridge arms; or when the generator is a four-phase alternating-current generator, the GCU includes four-phase bridge arms.

Similarly, the motor in the electric drive system may be a two-phase alternating-current motor, a four-phase alternating-current motor, a five-phase alternating-current motor, or the like. In this case, the MCU adaptively changes a quantity of bridge arms based on a quantity of generator windings in different types of generators. For example, when the motor is a two-phase alternating-current motor, the MCU includes two-phase bridge arms; or when the generator is a four-phase alternating-current motor, the MCU includes four-phase bridge arms.

Optionally, the GCU and the MCU shown in FIG. 4 are described by using two-level bridge arms as an example. In some feasible implementations, the bridge arms in the GCU and the MCU may be specifically implemented as three-level bridge arms, four-level bridge arms, or five-level bridge arms. For details, refer to the conventional technology. Details are not described herein again.

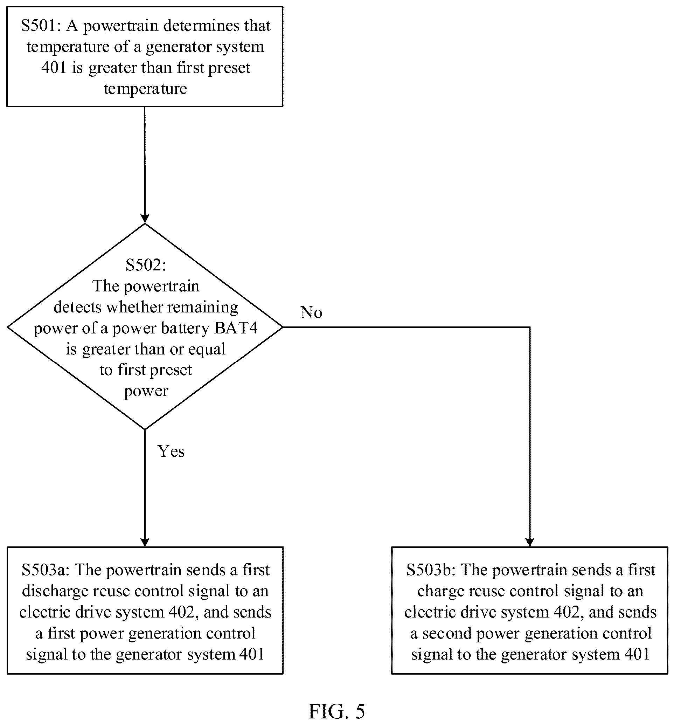

With reference to FIG. 5 to FIG. 10, the following describes in detail how to specifically control the powertrain shown in FIG. 4 to be in an electric drive system reuse mode.

First, FIG. 5 is a diagram of a control process of a controller according to an embodiment of this application. As shown in FIG. 5, steps performed by the powertrain are as follows.

S501: The powertrain determines that temperature of the generator system 401 is greater than first preset temperature. During specific implementation, the generator *M*₄₁ of the generator system 401 is provided with a temperature sensor, or the GCU 4011 is also provided with a temperature sensor. The powertrain may use actual temperature of the generator *M*₄₁ or actual temperature of the GCU 4011 as the temperature of the generator system 401. To be specific, the powertrain compares either the actual temperature of the generator *M*₄₁ or the actual temperature of the GCU 4011 with the first preset temperature.

For example, if the powertrain uses the actual temperature of the generator *M*₄₁ as the temperature of the generator system 401, the first preset temperature may be rated temperature of the generator *M*₄₁, and the powertrain compares the actual temperature of the generator *M*₄₁ with the rated temperature of the generator *M*₄₁ . Alternatively, the powertrain uses the actual temperature of the GCU 4011 as the temperature of the generator system 401, and the first preset temperature may be rated temperature of each switching transistor in the GCU 4011. In this case, the powertrain compares the actual temperature of the GCU 4011 with the rated temperature of each switching transistor in the GCU 4011.

When either the actual temperature of the generator *M*₄₁ or the actual temperature of the GCU 4011 is greater than the first preset temperature, the powertrain determines that the temperature of the generator system 401 is greater than the first preset temperature.

It should be noted that, in this embodiment of this application, the steps performed by the powertrain may be specifically performed by a controller in the GCU, or may be performed by a controller in the MCU, or may be jointly performed by a controller in the GCU and a controller in the MCU through communication. The controller may be, for example, a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

S502: The powertrain detects whether remaining power of the power battery BAT4 is greater than or equal to first preset power. If the remaining power of the power battery BAT4 is greater than or equal to the first preset power, the powertrain performs step S503a; otherwise, the powertrain performs step S503b.

During specific implementation, the remaining power of the power battery BAT4 may be detected by a battery management system (Battery Management System, BMS) in real time, and the powertrain obtains the remaining power of the power battery BAT4 from the BMS.

The first preset power is a preset value, and a value of the first preset power may be determined based on a specific practice. For example, the value of the first preset power is related to a battery type of the power battery BAT4.

S503a: The powertrain sends a first discharge reuse control signal to the electric drive system 402, and sends a first power generation control signal to the generator system 401. In this case, the powertrain is in an electric drive system discharge reuse mode of the electric drive system reuse mode.

During specific implementation, the powertrain subtracts a preset target value *V*₁ from a second modulated signal of each second bridge arm, to obtain a first modulated signal of each second bridge arm. The preset target value *V*₁ is determined by the powertrain based on a voltage of the power battery BAT4 and a bus voltage. For example, the preset target value *V*₁ may be a ratio of the voltage of the power battery BAT4 to the bus voltage.

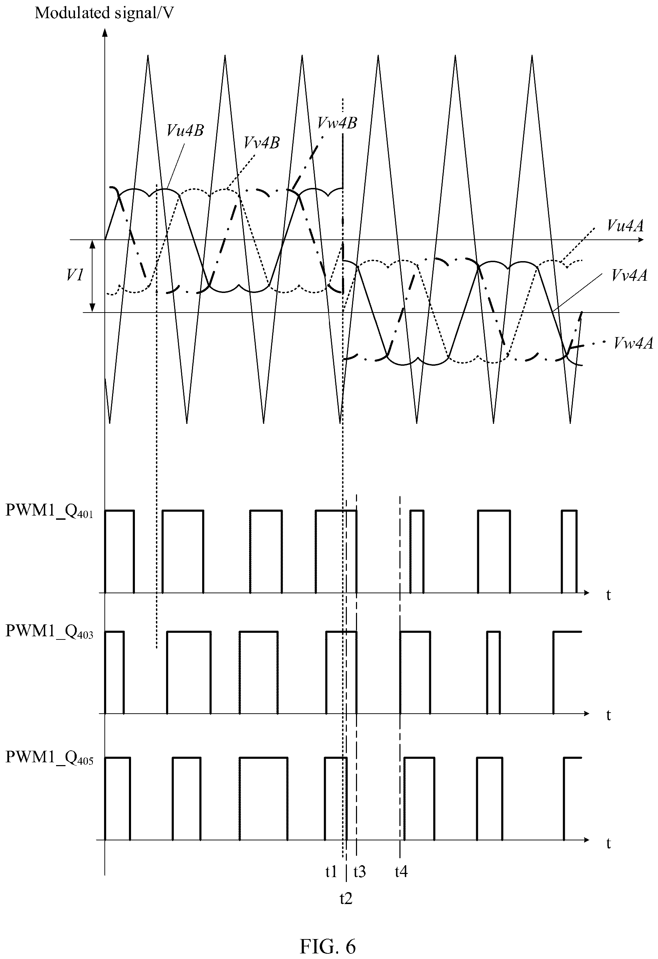

For the first modulated signal and the second modulated signal of each second bridge arm, refer to FIG. 6. As shown in FIG. 6, an amplitude of a first modulated signal *V*_{*U*4*A*} obtained after a moment t1 is reduced by the preset target value *V*₁ compared with an amplitude of a second modulated signal *V*_{*U*4*B*} obtained before the moment t1. To be specific, the preset target value *V*₁ serves as a negative bias voltage, and the powertrain may subtract the preset target value *V*₁ from the second modulated signal *V*_{*U*4*B*} to obtain the first modulated signal *V*_{*U*4}*_{A}.* Similarly, an amplitude of a first modulated signal *V*_{*V*4*A*} obtained after the moment t1 is reduced by the preset target value *V*₁ compared with an amplitude of a second modulated signal *V*_{*V*4*B*} obtained before the moment t1. To be specific, the preset target value *V*₁ serves as a negative bias voltage, and the powertrain may subtract the preset target value *V*₁ from the second modulated signal *V*_{*V*4*B*} to obtain the first modulated signal *V*_{*V*4*A.*} An amplitude of a first modulated signal *V*_{*W*4*A*} obtained after the moment t1 is reduced by the preset target value *V*₁ compared with an amplitude of a second modulated signal *V*_{*W*4*B*} obtained before the moment t1. To be specific, the preset target value *V*₁ serves as a negative bias voltage, and the powertrain may subtract the preset target value *V*₁ from the second modulated signal *V*_{*W*4B} to obtain the first modulated signal *V*_{*W*4}*_{A}.*

In this case, the powertrain compares the first modulated signal *V*_{*U*4*A*} with a preset reference signal, to generate a signal PWM1_*Q*₄₀₁ (to be specific, a first PWM signal of the upper switching transistor *Q*₄₀₁) obtained after the moment t1. It can be learned that a duty cycle of the signal PWM1_*Q*₄₀₁ obtained after the moment t1 is less than a duty cycle of a signal PWM1_*Q*₄₀₁ obtained before the moment t1. To be specific, that the powertrain subtracts the preset target value *V*₁ from the second modulated signal *V*_{*U*4*B*} is specifically reducing a duty cycle of a control signal of the upper switching transistor *Q*₄₀₁.

Similarly, the powertrain compares the first modulated signal *V*_{*V*4*A*} with a preset reference signal, to generate a signal PWM1_*Q*₄₀₃ (to be specific, a first PWM signal of the upper switching transistor *Q*₄₀₃) obtained after the moment t1. A duty cycle of the signal PWM1_*Q*₄₀₃ obtained after the moment t1 is less than a duty cycle of a signal PWM1_*Q*₄₀₃ obtained before the moment t1.

The powertrain compares the first modulated signal *V*_{*W*4*A*} with a preset reference signal, to generate a signal PWM1_*Q*405 (to be specific, a first PWM signal of the upper switching transistor *Q*₄₀₅) obtained after the moment t1. A duty cycle of the signal PWM1_*Q*₄₀₅ obtained after the moment t1 is less than a duty cycle of a signal PWM1_*Q*₄₀₅ obtained before the moment t1.

That the powertrain sends the first discharge reuse control signal to the electric drive system 402 is specifically sending the signal PWM1_*Q*₄₀₁ obtained after the moment t1 to the upper switching transistor *Q*₄₀₁, sending the signal PWM1_*Q*₄₀₃ obtained after the moment t1 to the upper switching transistor *Q*₄₀₃, and sending the signal PWM1_*Q*₄₀₅ obtained after the moment t1 to the upper switching transistor *Q*₄₀₅.

The powertrain sends the first power generation control signal to the generator system 401, where the first power generation control signal may be determined based on an operation parameter of the generator *M*₄₁ and the bus voltage. For a specific implementation, refer to a manner of controlling power generation of an existing generator. Details are not described herein.

In this case, the generator system 401 generates power, and the power battery BAT4 discharges through the electric drive system 402. The generator system 401 and the power battery BAT4 jointly output a first bus voltage between a positive bus BUS4+ and the negative bus BUS4-. The MCU 4021 drives, based on the first bus voltage, the motor *M*₄₂ to output a torque, to drive a vehicle. That is, the power battery BAT4 and the generator system 401 jointly provide a drive voltage for the motor *M*₄₂. In this case, a first bridge arm and a motor winding connected to the first bridge arm can ensure a function of the electric drive system, to be specific, can implement a function of a DC/AC converter. In addition, the first bridge arm and the motor winding corresponding to the first bridge arm can implement a function of a DC/DC converter, and specifically, implement a boost function of the DC/DC converter, that is, a boost converter.

For example, a time period between the moment t1 and a moment t2 is used as an example. In this case, all of the signal PWM1_*Q*₄₀₁, the signal PWM1_*Q*₄₀₃, and the signal PWM1_*Q*₄₀₅ are at a high level. To be specific, the upper switching transistor *Q*₄₀₁, the upper switching transistor *Q*₄₀₃, and the upper switching transistor *Q*₄₀₅ are turned on. Because the powertrain controls signals of two switching transistors in a same bridge arm to be complementary, in this case, the lower switching transistor *Q*₄₀₂, the lower switching transistor *Q*₄₀₄, and the lower switching transistor *Q*₄₀₆ are turned off. That is, an upper switching transistor and a lower switching transistor in a same second bridge arm are alternately turned on. Alternatively, dead time is set for alternate turn-on of an upper switching transistor and a lower switching transistor in a same second bridge arm. In this case, both the upper switching transistor and the lower switching transistor in the same second bridge arm are turned off.

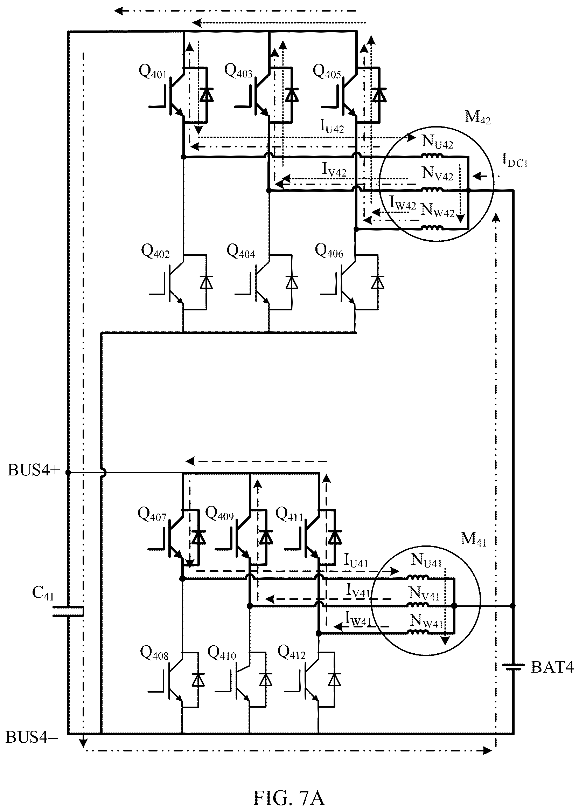

The powertrain may form a circuit state shown in FIG. 7A. As shown in FIG. 7A, assuming that three motor windings have same inductive reactance, a current flowing through the motor winding *N_{U42}* is *I*_{*U*42} *+ I*_{*DC*1}/*3,* a current flowing through the motor winding *N*_{*V*42} is *I*_{*V*42} *+ I_{DC1}*/3*,* and a current flowing through the motor winding *N*_{*W*42} is *I*_{*W*42} *+ I_{DC1}*/3*,* where *I*_{*U*42} + *I*_{*V*42} + *I*_{*W*42} = 0. In this case, the motor *M*₄₂ outputs a torque. In addition, the power battery BAT4 discharges through the motor winding *N*_{*U*42}*,* the motor winding *N*_{*V*42}*,* and the motor winding *N*_{*W*42}. That is, the power battery BAT4 is in a discharge state. A discharge current is *I*_{*DC*1}*.* To be specific, in this case, a current of the three-phase winding of the motor includes a drive current of the motor and the discharge current of the power battery.

It should be noted that a direction of a current in a process of outputting the torque by the motor *M*₄₂ is random, and the current may flow in from the motor winding *N_{U42}* and the motor winding *N*_{*V*42}*,* and flow out from the motor winding *N*_{*W*42}. Regardless of how a direction of a current of each motor winding changes, a sum of currents of the three motor windings is zero, that is, *I*_{*U*42} + *I*_{*V*42} + *I*_{*W*42} = 0.

In this case, the powertrain sends the first power generation control signal to the generator system 401, a sum of currents of the three generator windings of the generator *M*₄₁ is zero, and the generator *M*₄₁ generates power. For example, in FIG. 7A, the switching transistor *Q*₄₀₈, the switching transistor *Q*₄₁₀, and the switching transistor *Q*₄₁₂ are turned off, and the switching transistor Q₄₀₇, the switching transistor Q₄₀₉, and the switching transistor *Q*₄₁₁ are turned on. A current generated by the generator *M*₄₁ for power generation flows in from the generator winding *N*_{*U*41}*,* and flows out from the generator winding *N*_{*V*41} and the generator winding *N*_{*W*41} to the positive bus BUS4+ and the negative bus BUS4-. In this circuit state, *I*_{*U*41} *+ I*_{*V*41} *+ I*_{*W*41} = 0. In this case, the generator *M*₄₁ generates power. To be specific, in this case, a current of the three-phase winding of the generator includes only a power generation current of the generator.

It should be noted that the power generation current circuit in the generator system shown in FIG. 7A should be understood as an example. Because a direction of a current generated when the generator *M*₄₁ generates power is random, the current generated by the generator may flow out from the generator winding *N*_{*U*41}*,* flow in from the generator winding *N*_{*V*41}*,* and flow in from the generator winding *N*_{*W*41}. Regardless of how a direction of a current of each generator winding changes, when the generator *M*₄₁ generates power, a sum of currents of the three generator windings is zero, that is, *I*_{*U*41} + *I*_{*V*41} + *I*_{*W*41} = 0.

To sum up, within the time period between the moment t1 and the moment t2, both the generator *M*₄₁ and the power battery BAT4 drive the motor *M*₄₂.

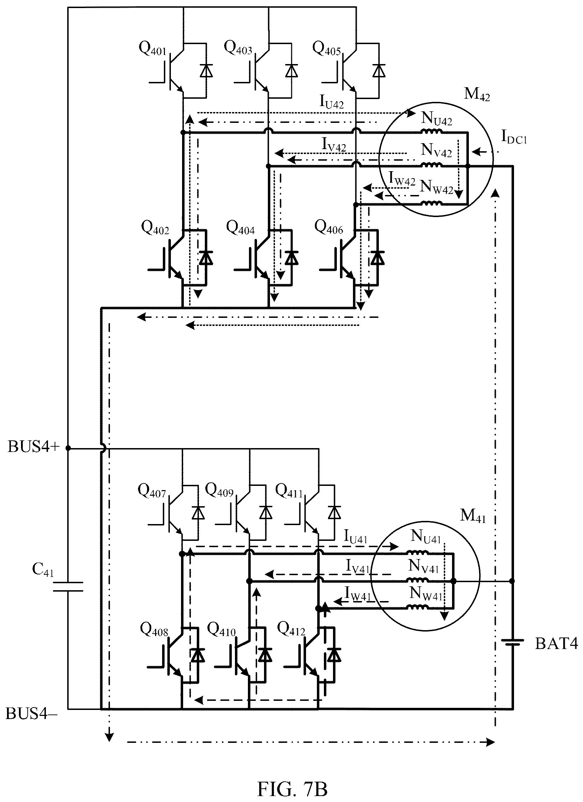

Within a time period between a moment t3 and a moment t4, in this case, all of the signal PWM1_*Q*₄₀₁, the signal PWM1_*Q*₄₀₃, and the signal PWM1_*Q*₄₀₅ are at a low level. To be specific, the upper switching transistor *Q*₄₀₁, the upper switching transistor *Q*₄₀₃, and the upper switching transistor *Q*₄₀₅ are turned off, and the lower switching transistor *Q*₄₀₂, the lower switching transistor *Q*₄₀₄, and the lower switching transistor *Q*₄₀₆ are turned on. The powertrain may form a circuit state shown in FIG. 7B. As shown in FIG. 7B, currents of the motor windings cannot change abruptly, and directions of currents of the three motor windings are still the directions of the currents in the circuit state shown in FIG. 7A. To be specific, a current flowing through the motor winding *N_{U42}* is *I*_{*U*42} *+ I*_{*DC*1}/3*,* a current flowing through the motor winding *N*_{*V*42} is *I*_{*V*42} *+ I*_{*DC*1}/3*,* and a current flowing through the motor winding *N*_{*W*42} is *I*_{*W*42} + *I*_{*DC*1}/3*,* where *I*_{*U*42} *+ I*_{*V*42} *+ I*_{*W*42} *=* 0. In this case, the motor *M*₄₂ outputs a torque, and the three motor windings are in an energy storage stage. To be specific, in this case, a current of the three-phase winding of the motor includes a drive current of the motor and a discharge current of the power battery.

In this case, a sum of currents of the three generator windings of the generator *M*₄₁ is still zero. For example, in FIG. 7B, the lower switching transistor *Q*₄₀₈, the lower switching transistor *Q*₄₁₀, and the lower switching transistor *Q*₄₁₂ are turned on, and the upper switching transistor Q₄₀₇, the upper switching transistor Q₄₀₉, and the upper switching transistor *Q*₄₁₁ are turned off. A current generated by the generator *M*₄₁ for power generation flows in from the generator winding *N*_{*U*41}*,* and passes through the generator winding *N*_{*V*41} and the generator winding *N*_{*W*41} to form a closed loop. In this circuit state, *I*_{*U*41} *+ I*_{*V*41} *+ I*_{*W*41} = 0. In this case, the three generator windings are also in an energy storage stage.

To sum up, the preset target value *V*₁ is subtracted from second modulated signals of the three second bridge arms. To be specific, the three second bridge arms in the MCU are reused for discharge control of the power battery. In this embodiment of this application, turn-on time and turn-off time of a switching transistor corresponding to a second bridge arm are changed, to enable the motor to output a torque and the power battery to discharge at the same time. To be specific, the electric drive system can implement both a function of a boost converter and a function of a DC/AC converter. In this case, it can be understood that the discharge current of the power battery BAT4 flows through each motor winding. To be specific, when the temperature of the generator system 401 is greater than the first preset temperature, heat generated by the discharge current of the power battery BAT4 is carried by the electric drive system 402, to avoid overheating of the generator system 401. In addition, the power battery BAT4 may also supply electric energy to the motor *M*₄₂. This further relieves pressure of the generator system 401 to supply electric energy, and reduces heat generated by the generator system 401.

Optionally, in some feasible implementations, the preset target value *V*₁ (not shown in the figure) may be subtracted from a second modulated signal/second modulated signals of one or two of the three second bridge arms. To be specific, one or two second bridge arms may be reused for discharge control of the powertrain. For example, the powertrain reuses one second bridge arm. That the powertrain sends the first discharge reuse control signal to the electric drive system 402 may be specifically sending the signal PWM1_*Q*₄₀₁ obtained after the moment t1 to the upper switching transistor *Q*₄₀₁, sending the signal PWM1_*Q*₄₀₃ obtained before the moment t1 to the upper switching transistor *Q*₄₀₃, and sending the signal PWM1_*Q*₄₀₅ obtained before the moment t1 to the upper switching transistor *Q*₄₀₅. In this case, the circuit states in FIG. 7A and FIG. 7B may still be formed, the motor *M*₄₂ outputs a torque, and the power battery BAT4 is in the discharge state.

Optionally, in some feasible implementations, the powertrain monitors a vehicle speed, and when the vehicle speed increases to a preset speed threshold and the temperature of the generator system 401 is greater than the first preset temperature, if the remaining power of the power battery BAT4 is greater than or equal to the first preset power, the powertrain performs step S503a. In this case, the vehicle speed is high, and the power battery BAT4 and the generator *M*₄₁ jointly drive the motor *M*₄₂.

Optionally, in some feasible implementations, the motor *M*₄₂ may not output a torque, and the power battery BAT4 is in the discharge state. For example, in this case, the power battery BAT4 outputs a voltage between the positive bus BUS4+ and the negative bus BUS4-. In this case, the power battery may provide power for the generator M₄₁, and during rotation, the generator *M*₄₁ drives an internal combustion engine to ignite, to start the generator *M*₄₁ to convert mechanical energy into electric energy.

In this case, the powertrain may determine a second PWM signal of each second bridge arm based on the bus voltage and the voltage of the power battery BAT4.

It can be understood that, for a specific implementation of determining, by the powertrain, the second PWM signal based on the bus voltage and the voltage of the power battery BAT4, reference may be made to a manner of determining a control signal of a switching transistor in an existing boost converter. Details are not described herein.

S503b: The powertrain sends a first charge reuse control signal to the electric drive system 402, and sends a second power generation control signal to the generator system 401. In this case, the powertrain is in an electric drive system charge reuse mode of the electric drive system reuse mode.

During specific implementation, the powertrain superposes a preset target value *V*₂ on a second modulated signal of each second bridge arm, to obtain a first modulated signal of each second bridge arm. The preset target value *V*₂ is determined by the powertrain based on a voltage of the power battery BAT4 and a bus voltage. For example, the preset target value *V*₂ is a ratio of the voltage of the power battery BAT4 to the bus voltage.

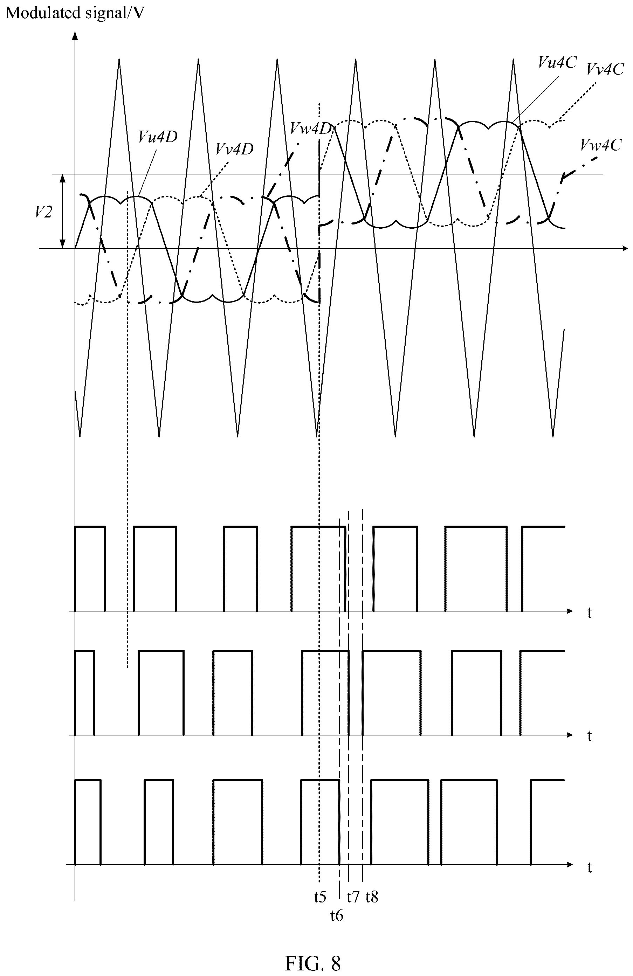

In this case, for a first modulated signal and a second modulated signal of each first bridge arm, refer to FIG. 8. As shown in FIG. 8, an amplitude of a first modulated signal *V*_{*U*4*C*} obtained after a moment t5 is increased by the preset target value *V*₂ compared with an amplitude of a second modulated signal *V*_{*U*4*D*} obtained before the moment t5. To be specific, the preset target value *V*₂ serves as a positive bias voltage, and the powertrain superposes the preset target value *V*₂ on the second modulated signal *V*_{*U*4*D*} to obtain the first modulated signal *V*_{*U*4}*_{C}.* Similarly, an amplitude of a first modulated signal *V*_{*V*4*C*} obtained after the moment t5 is increased by the preset target value *V*₂ compared with an amplitude of a second modulated signal *V*_{*V*4*D*} obtained before the moment t5. To be specific, the preset target value *V*₂ serves as a positive bias voltage, and the powertrain superposes the preset target value *V*₂ on the second modulated signal *V*_{*V*4*D*} to obtain the first modulated signal *V*_{*V*4}*_{C}.* An amplitude of a first modulated signal *V*_{*W*4*C*} obtained after the moment t5 is increased by the preset target value *V*₂ compared with an amplitude of a second modulated signal *V*_{*W*4*D*} obtained before the moment t5. To be specific, the preset target value *V*₂ serves as a positive bias voltage, and the powertrain superposes the preset target value *V*₂ on the second modulated signal *V*_{*W*4*D*} to obtain the first modulated signal *V*_{*W*4}*_{C}.*

In this case, the powertrain compares the first modulated signal *V*_{*U*4*C*} with a preset reference signal, to generate a signal PWM_*Q*₄₀₁ (to be specific, a first PWM signal of the upper switching transistor *Q*₄₀₁) obtained after the moment t5. It can be learned that a duty cycle of the signal PWM_*Q*₄₀₁ obtained after the moment t5 is greater than a duty cycle of a signal PWM_*Q*₄₀₁ obtained after the moment t5. To be specific, that the powertrain superposes the preset target value *V*₂ on the second modulated signal *V*_{*U*4*D*} is specifically increasing a duty cycle of a control signal of the upper switching transistor *Q*₄₀₁*.*

Similarly, the powertrain compares the first modulated signal *V*_{*V*4*C*} with a preset reference signal, to generate a signal PWM_*Q*₄₀₃ (to be specific, a first PWM signal of the upper switching transistor *Q*₄₀₃) obtained after the moment t5. A duty cycle of the signal PWM_*Q*₄₀₃ obtained after the moment t5 is greater than a duty cycle of a signal PWM_*Q*₄₀₃ obtained after the moment t5.

The powertrain compares the first modulated signal *V*_{*W*4*C*} with a preset reference signal, to generate a signal PWM_*Q*₄₀₅ (to be specific, a first PWM signal of the upper switching transistor *Q*₄₀₅) obtained after the moment t5. A duty cycle of the signal PWM_*Q*₄₀₅ obtained after the moment t5 is greater than a duty cycle of a signal PWM_*Q*₄₀₅ obtained after the moment t5.

That the powertrain sends the first charge reuse control signal to the electric drive system 402 is specifically sending the signal PWM_*Q*₄₀₁ obtained after the moment t5 to the switching transistor *Q*₄₀₁, sending the signal PWM_*Q*₄₀₃ obtained after the moment t5 to the switching transistor *Q*₄₀₃, and sending the signal PWM_*Q*₄₀₅ obtained after the moment t5 to the switching transistor *Q*_{405.}

The powertrain sends the second power generation control signal to the generator system 401, where the second power generation control signal may be determined based on an operation parameter of the generator *M*₄₁ and the bus voltage. For a specific implementation, refer to a manner of controlling power generation of an existing generator. Details are not described herein.

For example, the second power generation control signal may be the same as the first power generation control signal. To be specific, when the power battery BAT4 is in a charge state or the discharge state, the generator system 401 outputs same power between the positive bus BSU4+ and the negative bus BUS4-. Alternatively, the second power generation control signal is different from the first power generation control signal, and the second power generation control signal may control power output by the generator system 401 between the positive bus BSU4+ and the negative bus BUS4- to be greater than power output by the generator system 401 between the positive bus BSU4+ and the negative bus BUS4-under the control of the first power generation control signal.

In this case, the generator system 401 generates power, and outputs a second bus voltage between the positive bus BUS4+ and the negative bus BUS4-. The MCU 4021 drives, based on the second bus voltage, the motor *M*₄₂ to output a torque and charge the power battery BAT4. That is, the generator system 401 provides both a drive voltage for the motor *M*₄₂ and a charge voltage for the power battery BAT4. In this case, a first bridge arm and a motor winding connected to the first bridge arm can ensure a function of the electric drive system of the motor, to be specific, can implement a function of a DC/AC converter. In addition, the first bridge arm and the motor winding connected to the first bridge arm can implement a function of a DC/DC converter, and specifically, implement a buck function of the DC/DC converter, that is, a buck converter.

For example, a time period between the moment t5 and a moment t6 is used as an example. In this case, all of the signal PWM_*Q*₄₀₁, the signal PWM_*Q*₄₀₃, and the PWM_*Q*₄₀₅ are at a high level. To be specific, the upper switching transistor *Q*₄₀₁, the upper switching transistor *Q*₄₀₃, and the upper switching transistor *Q*₄₀₅ are turned on, and the lower switching transistor *Q*₄₀₂, the lower switching transistor *Q*₄₀₄, and the lower switching transistor *Q*₄₀₆ are turned off. Similarly, an upper switching transistor and a lower switching transistor in a same first bridge arm are alternately turned on. Alternatively, dead time is set for turn-on of an upper switching transistor and a lower switching transistor in a same first bridge arm. In this case, both the upper switch transistor and the lower switching transistor in the same first bridge arm are turned off.

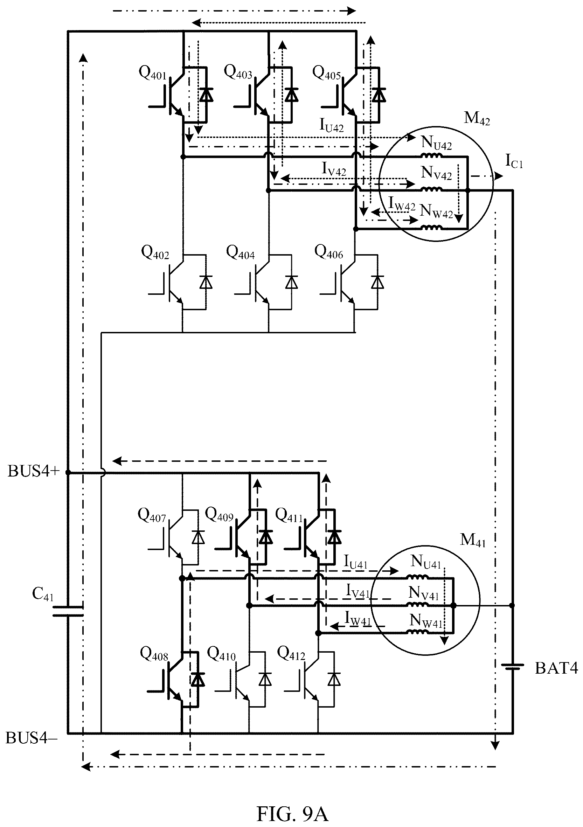

The powertrain may form a circuit state shown in FIG. 9A. As shown in FIG. 9A, assuming that three motor windings have same inductive reactance, a current flowing through the motor winding *N_{U42}* is *I*_{*U*42} + *I*_{*C*1}/3*,* a current flowing through the motor winding *N*_{*V*42} is *I*_{*V*42} + *I*_{*C*1}/3*,* and a current flowing through the motor winding *N*_{*W*42} is *I*_{*W*42} + *I*_{*C*1}/3*,* where *I*_{*U*42} + *I*_{*V*42} + *I*_{*W*42} = 0. In this case, the motor *M*₄₂ outputs a torque, and the generator system 401 charges the power battery BAT4 through the motor winding *N*_{*U*42}*,* the motor winding *N*_{*V*42}*,* and the motor winding *N*_{*W*42}*.* That is, the power battery BAT4 is in a charge state. A charge current is *I*_{*C*1}*.* To be specific, in this case, a current of the three-phase winding of the motor includes a drive current of the motor and the charge current of the power battery.

In this case, the powertrain sends the second power generation control signal to the generator system 401, a sum of currents of the three generator windings of the generator *M*₄₁ is zero, and the generator *M*₄₁ generates power. For example, in FIG. 9A, the switching transistor Q₄₀₇, the switching transistor *Q*₄₁₀, and the switching transistor *Q*₄₁₂ are turned off, and the switching transistor *Q*₄₀₈, the switching transistor Q₄₀₉, and the switching transistor *Q*₄₁₁ are turned on. A current generated by the generator *M*₄₁ for power generation flows in from the generator winding *N*_{*U*41}*,* and flows out from the generator winding *N*_{*V*41} and the generator winding *N*_{*W*41} to the positive bus BUS4+ and the negative bus BUS4-. In this circuit state, *I*_{*U*41} *+ I*_{*V*41} + *I*_{*W*41} = 0. In this case, the generator *M*₄₁ generates power. To be specific, in this case, a current of the three-phase winding of the generator includes only a power generation current of the generator.

It should be noted that the power generation current circuit in the electric drive system shown in FIG. 9A should be understood as an example. Because a direction of a current generated when the generator *M*₄₁ generates power is random, the current generated by the generator may flow out from the generator winding *N*_{*U*41}*,* flow in from the generator winding *N*_{*V*41}*,* and flow in from the generator winding *N*_{*W*41}. Regardless of how a direction of a current of each generator winding changes, when the generator *M*₄₁ generates power, a sum of currents of the three generator windings is zero, that is, *I*_{*U*41} + *I*_{*V*41} + *I*_{*W*41} = 0.

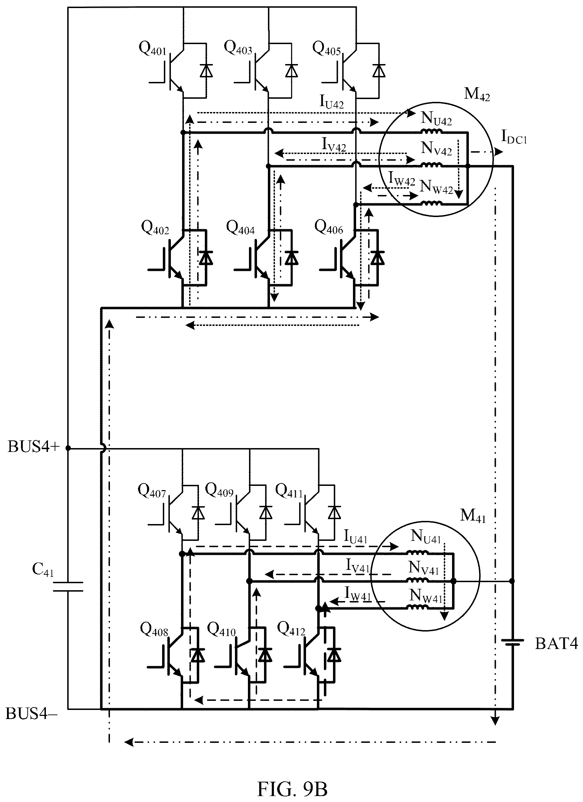

Within a time period between a moment t7 and a moment t8, in this case, all of the signal PWM_*Q*₄₀₁, the signal PWM_*Q*₄₀₃, and the signal PWM_*Q*₄₀₅ are at a low level. To be specific, the upper switching transistor *Q*₄₀₁, the upper switching transistor *Q*₄₀₃, and the upper switching transistor *Q*₄₀₅ are turned off, and the lower switching transistor *Q*₄₀₂, the lower switching transistor *Q*₄₀₄, and the lower switching transistor *Q*₄₀₆ are turned on. The powertrain may form a circuit state shown in FIG. 9B. As shown in FIG. 9B, currents of the motor windings cannot change abruptly, and directions of currents of the three motor windings are still the directions of the currents in the circuit state shown in FIG. 9A. To be specific, a current flowing through the motor winding *N_{U42}* is *I*_{*U*42} + *I*_{*C*1}/3*,* a current flowing through the motor winding *N*_{*V*42} is *I*_{*V*42} *+ I*_{*C*1}/3*,* and a current flowing through the motor winding *N*_{*W*42} is *I*_{*W*42} + *I*_{*C*1}/3*,* where *I*_{*U*42} + *I*_{*V*42} + *I*_{*W*42} = 0. In this case, the motor *M*₄₂ outputs a torque, and the three motor windings are in an energy storage stage. To be specific, in this case, a current of the three-phase winding of the motor includes a drive current of the motor and a charge current of the power battery.

In this case, a sum of currents of the three generator windings of the generator *M*₄₁ is still zero. For example, in FIG. 9B, the lower switching transistor *Q*₄₀₈, the lower switching transistor *Q*₄₁₀, and the lower switching transistor *Q*₄₁₂ are turned on, and the upper switching transistor Q₄₀₇, the upper switching transistor Q₄₀₉, and the upper switching transistor *Q*₄₁₁ are turned off. A current generated by the generator *M*₄₁ for power generation flows in from the generator winding *N*_{*U*41}*,* and passes through the generator winding *N*_{*V*41} and the generator winding *N*_{*W*41} to form a closed loop. In this circuit state, *I*_{*U*41} + *I*_{*V*41} + *I*_{*W*41} = 0. In this case, the three generator windings are also in an energy storage stage.

To sum up, the preset target value *V*₂ is superposed on second modulated signals of the three bridge arms. To be specific, the three second bridge arms in the MCU are reused for charge control of the power battery. In this embodiment of this application, turn-on time and turn-off time of a switching transistor corresponding to a second bridge arm are changed, to enable the motor to output a torque, and charge the power battery at the same time. To be specific, the electric drive system can implement both a function of a DC/AC converter and a function of a buck converter. In this case, it can be understood that the charge current of the power battery BAT4 flows through each motor winding. To be specific, when the temperature of the generator system 401 is greater than the first preset temperature, heat generated by the charge current of the power battery BAT4 is carried by the electric drive system 402, to avoid a case that the generator system 401 needs to not only supply electric energy to the power battery BAT, but also carry heat generated by the charge current of the power battery BAT4.

Optionally, in some feasible implementations, the preset target value *V*₂ (not shown in the figure) may be superposed on a second modulated signal/second modulated signals of one or two second bridge arms of the three bridge arms. To be specific, one or two second bridge arms may be reused for charge control of the power battery. For example, the powertrain reuses one second bridge arm. That the powertrain sends the first charge reuse control signal to the electric drive system 402 may be specifically sending the signal PWM1_*Q*₄₀₁ obtained after the moment t5 to the switching transistor *Q*₄₀₁, sending the signal PWM1_*Q*₄₀₃ obtained before the moment t5 to the upper switching transistor *Q*₄₀₃, and sending the signal PWM1_*Q*₄₀₅ obtained before the moment t5 to the upper switching transistor *Q*₄₀₅. In this case, the circuit states in FIG. 9A and FIG. 9B may still be formed, the motor *M*₄₂ outputs a torque, and the power battery BAT4 is in the charge state.

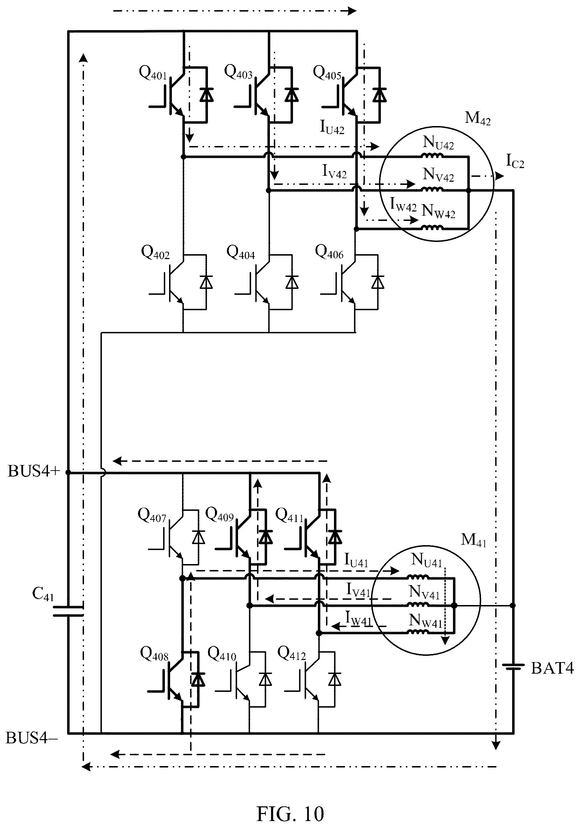

Optionally, in some feasible implementations, when the vehicle is in a stationary state, the motor *M*₄₂ does not output a torque. If the remaining power of the power battery BAT4 is less than third preset power, where the third preset power may be understood as minimum power to which the power battery BAT4 can discharge, the powertrain is in a battery charge-only mode. To be specific, the power battery BAT4 is in the charge state. In this case, the powertrain may form a circuit state shown in FIG. 10. The generator *M*₄₁ outputs a fifth bus voltage between the positive bus BUS4+ and the negative bus BUS4- through the GCU 4011. The MCU 4021 charges the power battery BAT4 based on the fifth bus voltage. For a specific control manner of the MCU 4021, refer to a manner of determining a control signal of a switching transistor in an existing buck converter. Details are not described herein.

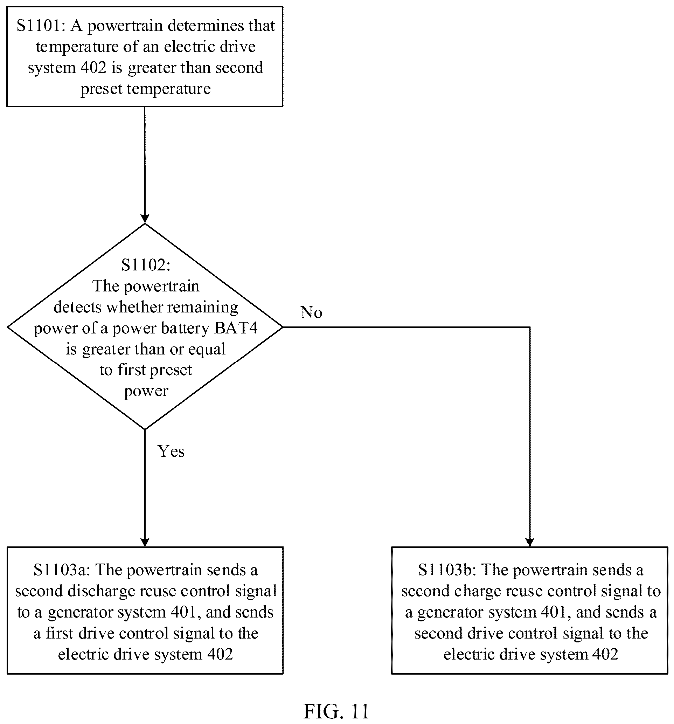

With reference to FIG. 11 to FIG. 15B, the following describes in detail how to specifically control the powertrain shown in FIG. 4 to be in a generator system reuse mode.

First, FIG. 11 is a diagram of another control process of a controller for a powertrain according to an embodiment of this application. As shown in FIG. 11, steps performed by the powertrain are as follows.

S1101: The powertrain determines that temperature of the electric drive system 402 is greater than second preset temperature. During specific implementation, the motor *M*₄₂ of the electric drive system 402 is provided with a temperature sensor, or the MCU 4021 is also provided with a temperature sensor. The powertrain may use actual temperature of the motor *M*₄₂ or actual temperature of the MCU 4021 as the temperature of the electric drive system 402. To be specific, the powertrain compares either the actual temperature of the motor *M*₄₂ or the actual temperature of the MCU 4021 with the second preset temperature.

For example, if the powertrain uses the actual temperature of the motor *M*₄₂ as the temperature of the electric drive system 402, the second preset temperature may be rated temperature of the motor M₄₂, and the powertrain compares the actual temperature of the motor *M*₄₂ with the rated temperature of the motor *M*₄₂. Alternatively, the powertrain uses the actual temperature of the MCU 4021 as the temperature of the electric drive system 402, and the second preset temperature may be rated temperature of each switching transistor in the MCU 4021. In this case, the powertrain compares the actual temperature of the MCU 4021 with the rated temperature of each switching transistor in the MCU 4021.

When either the actual temperature of the motor *M*₄₂ or the actual temperature of the MCU 4021 is greater than the second preset temperature, the powertrain determines that the temperature of the electric drive system 402 is greater than the second preset temperature.

It should be noted that, in this embodiment of this application, the steps performed by the powertrain may be specifically performed by a controller in the MCU, or may be performed by a controller in the GCU, or may be jointly performed by a controller in the GCU and a controller in the MCU through communication.

S1102: The powertrain detects whether remaining power of the power battery BAT4 is greater than or equal to first preset power. If the remaining power of the power battery BAT4 is greater than or equal to the first preset power, the powertrain performs step S1103a; otherwise, the powertrain performs step S1103b.

S1103a: The powertrain sends a second discharge reuse control signal to the generator system 401, and sends a first drive control signal to the electric drive system 402. In this case, the powertrain is in a generator system discharge reuse mode of the generator system reuse mode.

During specific implementation, the powertrain subtracts a preset target value *V*₃ from a second modulated signal of each first bridge arm, to obtain a first modulated signal of each first bridge arm. The preset target value *V*₃ is determined by the powertrain based on a voltage of the power battery BAT4 and a bus voltage. The bus voltage is a voltage difference between a positive bus BUS4+ and the negative bus BUS4-. For example, the preset target value *V*₃ may be a ratio of the voltage of the power battery BAT4 to the bus voltage.

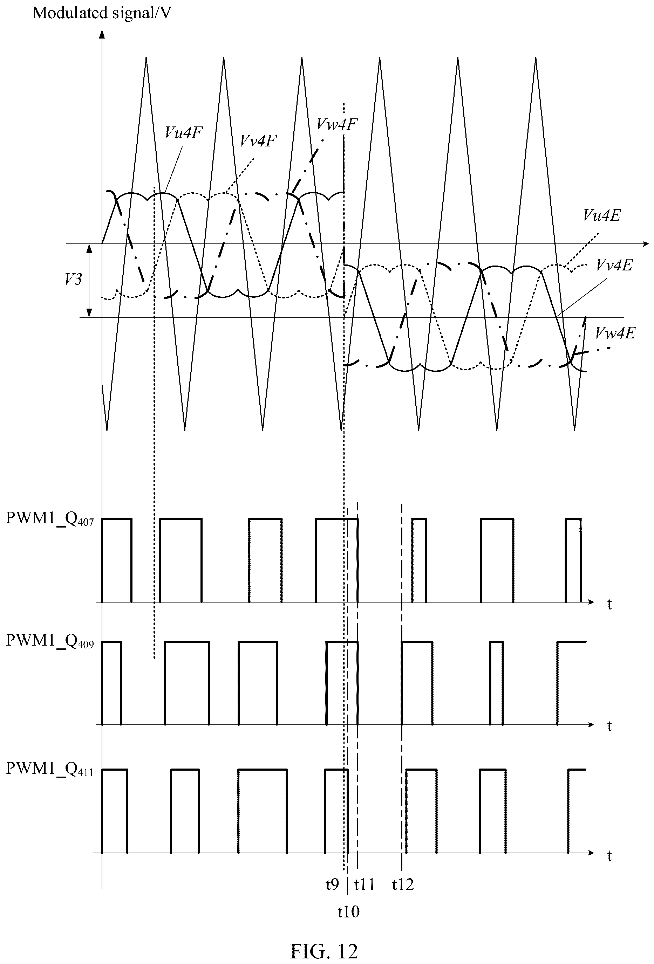

For the first modulated signal and the second modulated signal of each first bridge arm, refer to FIG. 12. As shown in FIG. 12, an amplitude of a first modulated signal *V*_{*U*4*E*} obtained after a moment t9 is reduced by the preset target value *V*₃ compared with an amplitude of a second modulated signal *V*_{*U*4*F*} obtained before the moment t9. To be specific, the preset target value *V*₃ serves as a negative bias voltage, and the powertrain may subtract the preset target value *V*₃ from the second modulated signal *V*_{*U*4*F*} to obtain the first modulated signal *V*_{*U*4}*_{E}.* Similarly, an amplitude of a first modulated signal *V*_{*V*4*E*} obtained after the moment t9 is reduced by the preset target value *V*₃ compared with an amplitude of a second modulated signal *V*_{*V*4*F*} obtained before the moment t9. To be specific, the preset target value *V*₃ serves as a negative bias voltage, and the powertrain may subtract the preset target value *V*₃ from the second modulated signal *V*_{*V*4*F*} to obtain the first modulated signal *V*_{*V*4}*_{E}.* An amplitude of a first modulated signal *V*_{*W*4*E*} obtained after the moment t9 is reduced by the preset target value *V*₃ compared with an amplitude of a second modulated signal *V*_{*W*4*F*} obtained before the moment t9. To be specific, the preset target value *V*₃ serves as a negative bias voltage, and the powertrain may subtract the preset target value *V*₃ from the second modulated signal *V*_{*W*4*F*} to obtain the first modulated signal *V*_{*W*4}*_{E}.*

In this case, the powertrain compares the first modulated signal *V*_{*U*4*E*} with a preset reference signal, to generate a signal PWM1_*Q*₄₀₇ (to be specific, a first PWM signal of the upper switching transistor *Q*₄₀₇) obtained after the moment t9. It can be learned that a duty cycle of the signal PWM1_*Q*₄₀₇ obtained after the moment t9 is less than a duty cycle of a signal PWM1_*Q*₄₀₇ obtained before the moment t9. To be specific, that the powertrain subtracts the preset target value *V*₃ from the second modulated signal *V*_{*U*4*F*} is specifically reducing a duty cycle of a control signal of the upper switching transistor *Q*₄₀₇.

Similarly, the powertrain compares the first modulated signal *V*_{*V*4*E*} with a preset reference signal, to generate a signal PWM1_*Q*₄₀₉ (to be specific, a first PWM signal of the upper switching transistor *Q*₄₀₉) obtained after the moment t9. A duty cycle of the signal PWM1_*Q*₄₀₉ obtained after the moment t9 is less than a duty cycle of a signal PWM1_*Q*₄₀₉ obtained before the moment t9.

The powertrain compares the first modulated signal *V*_{*W*4*E*} with a preset reference signal, to generate a signal PWM1_*Q*₄₁₁ (to be specific, a first PWM signal of the upper switching transistor *Q*₄₁₁) obtained after the moment t9. A duty cycle of the signal PWM1_*Q*₄₁₁ obtained after the moment t9 is less than a duty cycle of a signal PWM1_*Q*₄₁₁ obtained before the moment t9.

That the powertrain sends the second discharge reuse control signal to the generator system 401 is specifically sending the signal PWM1_*Q*₄₀₇ obtained after the moment t9 to the upper switching transistor Q₄₀₇, sending the signal PWM1_*Q*₄₀₉ obtained after the moment t9 to the upper switching transistor Q₄₀₉, and sending the signal PWM1_*Q*₄₁₁ obtained after the moment t9 to the upper switching transistor *Q*₄₁₁*.*

The powertrain sends the first drive control signal to the electric drive system 402, where the first drive control signal may be determined based on an operation parameter of the motor *M*₄₂ and the bus voltage. For a specific implementation, refer to a manner of controlling driving of an existing motor. Details are not described herein.

In this case, the generator system 401 generates power, the power battery BAT4 discharges through the generator system 401, and a third bus voltage is output between the positive bus BUS4+ and the negative bus BUS4-. The MCU 4021 drives, based on the third bus voltage, the motor *M*₄₂ to output a torque, to drive a vehicle. That is, the power battery BAT4 and the generator system 401 jointly provide a drive voltage for the motor *M*₄₂. In this case, a third bridge arm and a generator winding connected to the third bridge arm can ensure a power generation function of the generator system, to be specific, can implement a function of an AC/DC converter. In addition, the third bridge arm and the generator winding corresponding to the third bridge arm can implement a function of a DC/DC converter, and specifically, implement a boost function of the DC/DC converter, that is, a boost converter.

For example, a time period between the moment t9 and a moment t10 is used as an example. In this case, all of the signal PWM1_*Q*₄₀₇, the signal PWM1_*Q*₄₀₉, and the signal PWM1_*Q*₄₁₁ are at a high level. To be specific, the upper switching transistor Q₄₀₇, the upper switching transistor Q₄₀₉, and the upper switching transistor *Q*₄₁₁ are turned on. Because the powertrain controls signals of two switching transistors in a same bridge arm to be complementary, in this case, the lower switching transistor *Q*₄₀₈, the lower switching transistor *Q*₄₁₀, and the lower switching transistor *Q*₄₁₂ are turned off. That is, an upper switching transistor and a lower switching transistor in a same first bridge arm are alternately turned on. Alternatively, dead time is set for alternate turn-on of an upper switching transistor and a lower switching transistor in a same first bridge arm. In this case, both the upper switching transistor and the lower switching transistor in the same first bridge arm are turned off.

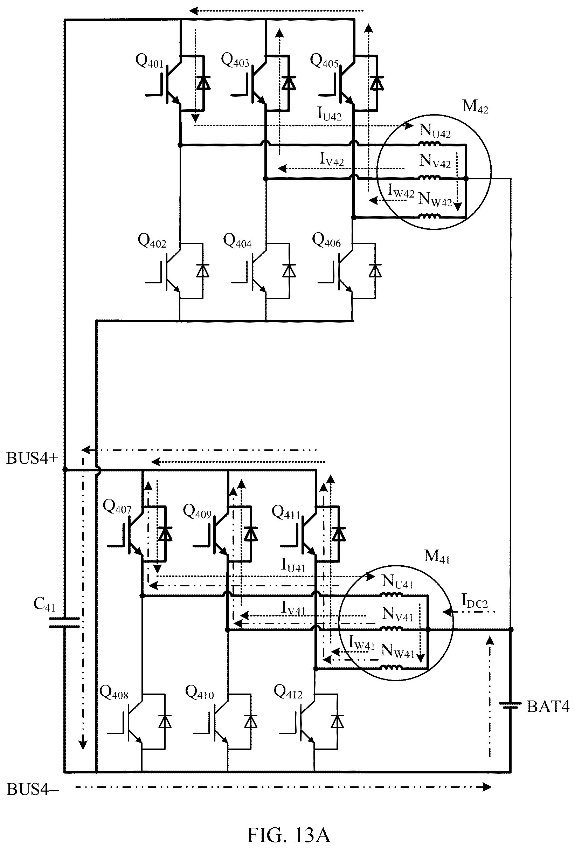

The powertrain may form a circuit state shown in FIG. 13A. As shown in FIG. 13A, assuming that three generator windings have same inductive reactance, a current flowing through the generator winding *N*_{*U*41} is *I*_{*U*41} *+ I*_{*DC*2}/3*,* a current flowing through the generator winding *N*_{*V*41} is *I*_{*V*41} *+ I*_{*DC*2}/3*,* and a current flowing through the generator winding *N*_{*W*41} is *I*_{*W*41} *+ I*_{*DC*2}/3*,* where *I*_{*U*41} *+ I*_{*V*41} + *I*_{*W*41} = 0. In this case, the generator *M*₄₁ generates power. In addition, the power battery BAT4 discharges through the generator winding *N*_{*U*41}*,* the generator winding *N*_{*V*41}*,* and the generator winding *N*_{*W*41}.That is, the power battery BAT4 is in a discharge state. A discharge current is *I*_{*DC*2}. To be specific, in this case, a current of the three-phase winding of the generator includes a power generation current of the generator and the discharge current of the power battery.

It should be noted that a direction of a current in a process of outputting the torque by the generator *M*₄₁ is random, and the current may flow in from the generator winding *N*_{*U*41} and the generator winding *N*_{*V*41}*,* and flow out from the generator winding *N*_{*W*41}. Regardless of how a direction of a current of each generator winding changes, a sum of currents of the three generator windings is zero, that is, *I*_{*U*41} + *I*_{*V*41} + *I*_{*W*41} = 0.

In this case, the powertrain sends the first drive control signal to the electric drive system 402, a sum of currents of the three motor windings of the motor *M*₄₂ is zero, and the motor *M*₄₂ generates power. For example, in FIG. 13A, the lower switching transistor *Q*₄₀₂, the lower switching transistor *Q*₄₀₄, and the lower switching transistor *Q*₄₀₆ are turned off, and the upper switching transistor *Q*₄₀₁, the upper switching transistor *Q*₄₀₃, and the upper switching transistor *Q*₄₀₅ are turned on. A current generated by the motor *M*₄₂ for power generation flows in from the motor winding *N*_{*U*42}*,* and flows out from the motor winding *N*_{*V*42} and the motor winding *N*_{*W*42} to the positive bus BUS4+ and the negative bus BUS4-. In this circuit state, *I*_{*U*42} *+ I*_{*V*42} *+ I*_{*W*42} = 0. In this case, the motor *M*₄₂ outputs a torque.

It should be noted that the drive current circuit in the electric drive system shown in FIG. 13A should be understood as an example. Because a direction of a current generated when the motor *M*₄₂ outputs a torque is random, the current generated by the motor *M*₄₂ may flow out from the motor winding *N*_{*U*42}*,* flow in from the motor winding *N*_{*V*42}*,* and flow in from the motor winding *N*_{*W*42}*.* Regardless of how a direction of a current of each motor winding changes, when the motor *M*₄₂ outputs a torque, a sum of currents of the three motor windings is zero, that is, *I*_{*U*42} + *I*_{*V*42} + *I*_{*W*42} = 0.

To sum up, within the time period between the moment t9 and the moment t10, both the generator *M*₄₁ and the power battery BAT4 drive the motor *M*₄₂.

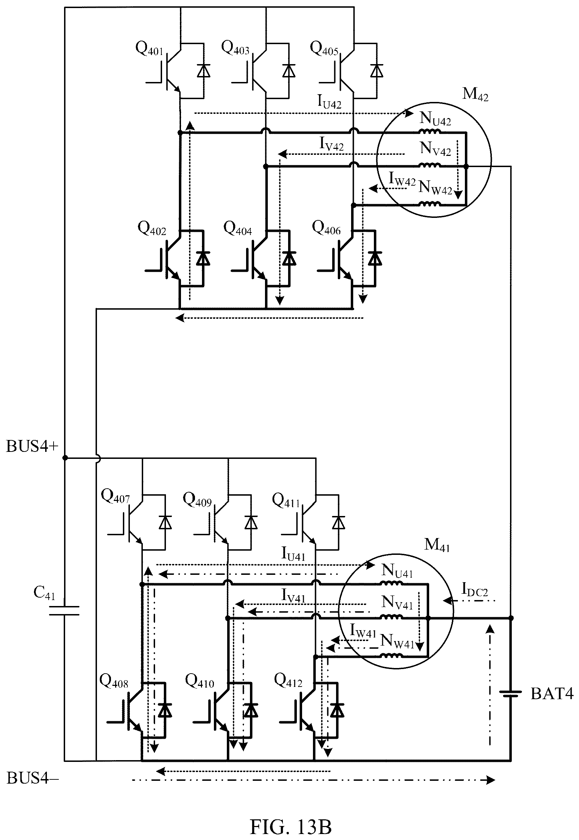

Within a time period between a moment t11 and a moment t12, in this case, all of the signal PWM1_*Q*₄₀₇, the signal PWM1_*Q*₄₀₉, and the signal PWM1_*Q*₄₁₁ are at a low level. To be specific, the upper switching transistor Q₄₀₇, the upper switching transistor Q₄₀₉, and the upper switching transistor *Q*₄₁₁ are turned off, and the lower switching transistor *Q*₄₀₈, the lower switching transistor *Q*₄₁₀, and the lower switching transistor *Q*₄₁₂ are turned on. The powertrain may form a circuit state shown in FIG. 13B. As shown in FIG. 13B, currents of the generator windings cannot change abruptly, and directions of currents of the three generator windings are still the directions of the currents in the circuit state shown in FIG. 13A. To be specific, a current flowing through the generator winding *N*_{*U*41} is *I*_{*U*41} *+ I*_{*DC*2}/3*,* a current flowing through the generator winding *N*_{*V*41} is *I*_{*V*41} *+ I*_{*DC*2}/3*,* and a current flowing through the generator winding *N*_{*W*41} is *I*_{*W*41} *+ I*_{*DC*2}/3*,* where *I*_{*U*41} *+ I*_{*V*41} *+ I*_{*W*41} = 0. In this case, the generator *M*₄₁ outputs a torque, and the three generator windings are in an energy storage stage. To be specific, in this case, a current of the three-phase winding of the generator includes a power generation current of the generator and a discharge current of the power battery.

In this case, a sum of currents of the three motor windings of the motor *M*₄₂ is still zero. For example, in FIG. 13B, the lower switching transistor *Q*₄₀₂, the lower switching transistor *Q*₄₀₄, and the lower switching transistor *Q*₄₀₆ are turned on, and the upper switching transistor *Q*₄₀₁, the upper switching transistor *Q*₄₀₃, and the upper switching transistor *Q*₄₀₅ are turned off. In this circuit state, *I*_{*U*42} + *I*_{*V*42} + *I*_{*W*42} = 0. In this case, the three motor windings are also in an energy storage stage.

To sum up, the preset target value *V*₃ is subtracted from second modulated signals of the three first bridge arms. To be specific, the three first bridge arms in the GCU are reused for discharge control of the power battery. In this embodiment of this application, turn-on time and turn-off time of a switching transistor corresponding to a first bridge arm are changed, to enable the generator to generate power and the power battery to discharge at the same time. To be specific, the generator system can implement both a function of a boost converter and a function of an AC/DC converter. In this case, it can be understood that the discharge current of the power battery BAT4 flows through each generator winding. To be specific, when the temperature of the electric drive system 402 is greater than the second preset temperature, heat generated by the discharge current of the power battery BAT4 is carried by the generator system 401, to avoid overheating of the electric drive system 402.

Optionally, in some feasible implementations, the preset target value *V*₃ (not shown in the figure) may be subtracted from a second modulated signal/second modulated signals of one or two of the three first bridge arms. To be specific, one or two first bridge arms may be reused for discharge control of the power battery. For example, the powertrain reuses one first bridge arm. That the powertrain sends the first discharge reuse control signal to the generator system 401 may be specifically sending the signal PWM1_*Q*₄₀₇ obtained after the moment t9 to the upper switching transistor Q₄₀₇, sending the signal PWM1_*Q*₄₀₉ obtained before the moment t9 to the upper switching transistor Q₄₀₉, and sending the signal PWM1_*Q*₄₁₁ obtained before the moment t9 to the upper switching transistor *Q*₄₁₁*.* In this case, the circuit states in FIG. 13A and FIG. 13B may still be formed, the generator *M*₄₂ generates power, and the power battery BAT4 is in the discharge state.

Optionally, in some feasible implementations, the powertrain monitors a vehicle speed, and when the vehicle speed increases to a preset speed threshold and the temperature of the electric drive system 402 is greater than the second preset temperature, if the remaining power of the power battery BAT4 is greater than or equal to the first preset power, the powertrain performs step S1103a. In this case, the vehicle speed is high, and the power battery BAT4 and the generator *M*₄₁ jointly drive the motor *M*₄₂.

Optionally, in some feasible implementations, the generator *M*₄₂ may not output a torque, and the power battery BAT4 is in the discharge state. For example, in this case, the power battery BAT4 outputs a voltage between the positive bus BUS4+ and the negative bus BUS4-. In this case, the power battery may provide a drive voltage for the motor M₄₂, to enable the motor *M*₄₁ to output a torque.

In this case, the powertrain may determine a second PWM signal of each fourth bridge arm based on the bus voltage and the voltage of the power battery BAT4.

It can be understood that, for a specific implementation of determining, by the powertrain, the second PWM signal based on the bus voltage and the voltage of the power battery BAT4, reference may be made to a manner of determining a control signal of a switching transistor in an existing boost converter. Details are not described herein.

S1103b: The powertrain sends a second charge reuse control signal to the generator system 401, and sends a second drive control signal to the electric drive system 402. In this case, the powertrain is in a generator system charge reuse mode of the generator system reuse mode.

During specific implementation, the powertrain superposes a preset target value *V*₄ on a second modulated signal of each first bridge arm, to obtain a first modulated signal of each first bridge arm. The preset target value *V*₄ is determined by the powertrain based on a voltage of the power battery BAT4 and a bus voltage. For example, the preset target value *V*₄ is a ratio of the voltage of the power battery BAT4 to the bus voltage.

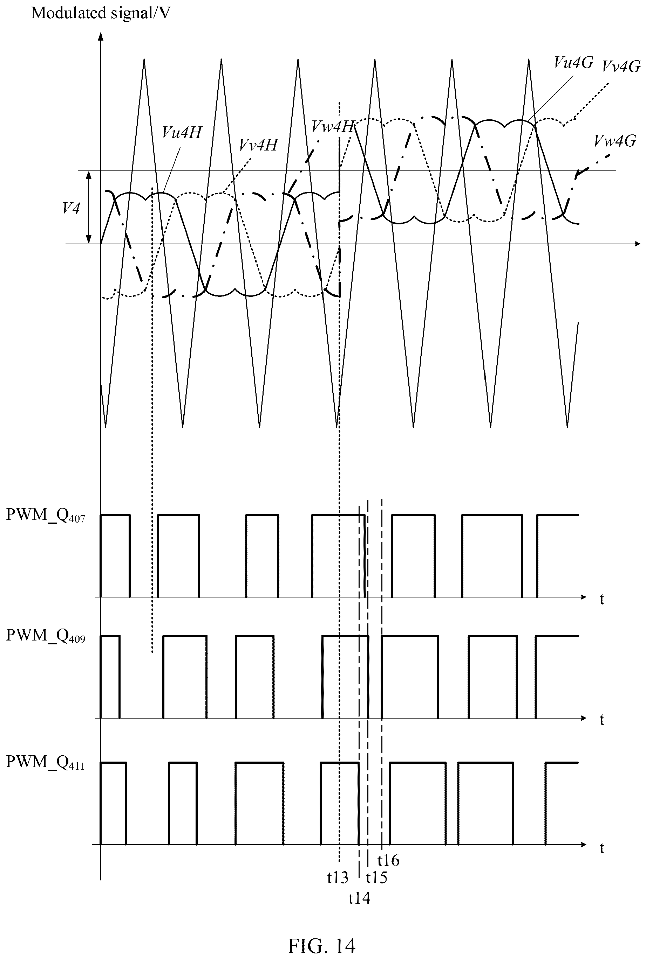

In this case, for a first modulated signal and a second modulated signal of each first bridge arm, refer to FIG. 14. As shown in FIG. 14, an amplitude of a first modulated signal *V*_{*U*4*G*} obtained after a moment t13 is increased by the preset target value *V*₄ compared with an amplitude of a second modulated signal *V*_{*U*4*H*} obtained before the moment t13. To be specific, the preset target value *V*₄ serves as a positive bias voltage, and the powertrain superposes the preset target value *V*₄ on the second modulated signal *V*_{*U*4*H*} to obtain the first modulated signal *V*_{*U*4}*_{G}.* Similarly, an amplitude of a first modulated signal *V*_{*V*4*G*} obtained after the moment t13 is increased by the preset target value *V*₄ compared with an amplitude of a second modulated signal *V*_{*V*4*H*} obtained before the moment t13. To be specific, the preset target value *V*₄ serves as a positive bias voltage, and the powertrain superposes the preset target value *V*₄ on the second modulated signal *V*_{*V*4*H*} to obtain the first modulated signal *V*_{*V*4}*_{G}.* An amplitude of a first modulated signal *V*_{*W*4*G*} obtained after the moment t13 is increased by the preset target value *V*₄ compared with an amplitude of a second modulated signal *V*_{*W*4*H*} obtained before the moment t13. To be specific, the preset target value *V*₄ serves as a positive bias voltage, and the powertrain superposes the preset target value *V*₄ on the second modulated signal *V*_{*W*4*H*} to obtain the first modulated signal *V*_{*W*4*G*}.

In this case, the powertrain compares the first modulated signal *V*_{*U*4*G*} with a preset reference signal, to generate a signal PWM_*Q*₄₀₇ (to be specific, a first PWM signal of the upper switching transistor *Q*₄₀₇*)* obtained after the moment t13. It can be learned that a duty cycle of the signal PWM_*Q*₄₀₇ obtained after the moment t13 is greater than a duty cycle of a signal PWM_*Q*₄₀₇ obtained after the moment t13. To be specific, that the powertrain superposes the preset target value *V*₄ on the second modulated signal *V*_{*U*4*H*} is specifically increasing a duty cycle of a control signal of the upper switching transistor *Q*₄₀₇.

Similarly, the powertrain compares the first modulated signal *V*_{*V*4*G*} with a preset reference signal, to generate a signal PWM_*Q*₄₀₉ (to be specific, a first PWM signal of the upper switching transistor *Q*₄₀₉) obtained after the moment t13. A duty cycle of the signal PWM_*Q*₄₀₉ obtained after the moment t13 is greater than a duty cycle of a signal PWM_*Q*₄₀₉ obtained after the moment t13.

The powertrain compares the first modulated signal *V*_{*W*4*G*} with a preset reference signal, to generate a signal PWM_*Q*₄₁₁ (to be specific, a first PWM signal of a third bridge arm in which the switching transistor *Q*₄₁₁ is located) obtained after the moment t13. A duty cycle of the signal PWM_*Q*₄₁₁ obtained after the moment t13 is greater than a duty cycle of a signal PWM_*Q*₄₁₁ obtained after the moment t13.

That the powertrain sends the second charge reuse control signal to the generator system 401 is specifically sending the signal PWM_*Q*₄₀₇ obtained after the moment t13 to the switching transistor Q₄₀₇, sending the signal PWM_*Q*₄₀₉ obtained after the moment t13 to the switching transistor Q₄₀₉, and sending the signal PWM_*Q*₄₁₁ obtained after the moment t13 to the switching transistor *Q*₄₁₁*.*

The powertrain sends the second drive control signal to the electric drive system 402, where the second drive control signal may be determined based on an operation parameter of the motor *M*₄₂ and the bus voltage. For a specific implementation, refer to a manner of controlling driving of an existing motor. Details are not described herein.

For example, the second drive control signal may be the same as the first drive control signal. To be specific, when the power battery BAT4 is in a charge state or the discharge state, the generator system 401 outputs same power between the positive bus BSU4+ and the negative bus BUS4-. Alternatively, the second drive control signal is different from the first drive control signal, a rotational speed of the motor *M*₄₂ under the control of the first drive control signal is less than a rotational speed of the motor *M*₄₂ under the control of the second drive control signal.

In this case, the generator system 401 generates power, the generator system 401 charges the power battery BAT4, and a fourth bus voltage is output between the positive bus BUS4+ and the negative bus BUS4-. The MCU 4021 drives, based on the fourth bus voltage, the generator *M*₄₂ to output a torque. That is, the generator system 401 provides both a drive voltage for the motor *M*₄₂ and a charge voltage for the power battery BAT4. In this case, a third bridge arm and a generator winding connected to the third bridge arm can ensure a power generation function of the generator system, to be specific, can implement a function of an AC/DC converter. In addition, a first bridge arm and a generator winding connected to the first bridge arm can implement a function of a DC/DC converter, and specifically, implement a buck function of the DC/DC converter, that is, a buck converter.

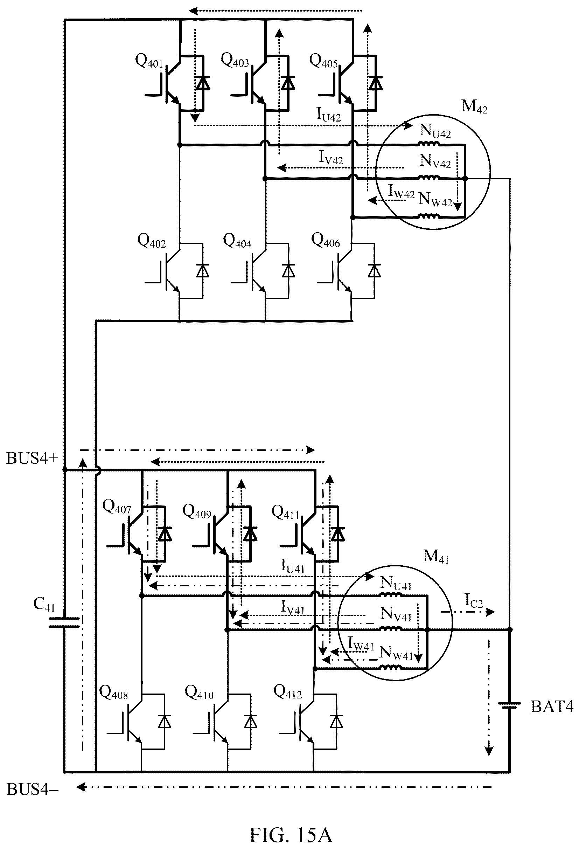

For example, a time period between the moment t13 and a moment t14 is used as an example. In this case, all of the signal PWM_*Q*₄₀₇, the signal PWM_*Q*₄₀₉, and the PWM_*Q*₄₁₁ are at a high level. To be specific, the switching transistor Q₄₀₇, the switching transistor Q₄₀₉, and the switching transistor *Q*₄₁₁ are turned on, and the switching transistor *Q*₄₀₈, the switching transistor *Q*₄₁₀, and the switching transistor *Q*₄₁₂ are turned off. The powertrain may form a circuit state shown in FIG. 15A. As shown in FIG. 15A, assuming that three generator windings have same inductive reactance, a current flowing through the generator winding *N*_{*U*41} is *I*_{*U*41} *+ I*_{*C*2}/3*,* a current flowing through the generator winding *N*_{*V*41} is *I*_{*V*41} + *I*_{*C*2}/3*,* and a current flowing through the generator winding N_{*W*41} is *I*_{*W*41} *+ I*_{*C*2}/3*,* where *I*_{*U*41} *+ I*_{*V*41} + *I*_{*W*41} = 0. In this case, the generator *M*₄₁ outputs a torque, and the generator system 401 charges the power battery BAT4 through the generator winding *N*_{*U*41}*,* the generator winding *N*_{*V*41}*,* and the generator winding N_{*W*41}. That is, the power battery BAT4 is in a charge state. A charge current is *I*_{*C*2}*.* To be specific, in this case, a current of the three-phase winding of the generator includes a power generation current of the generator and the charge current of the power battery.

In this case, the powertrain sends the second drive control signal to the electric drive system 402, a sum of currents of the three motor windings of the motor *M*₄₂ is zero, and the motor *M*₄₂ generates power. For example, in FIG. 15A, the lower switching transistor *Q*₄₀₂, the lower switching transistor *Q*₄₀₄, and the lower switching transistor *Q*₄₀₆ are turned off, and the upper switching transistor *Q*₄₀₁, the upper switching transistor *Q*₄₀₃, and the upper switching transistor *Q*₄₀₅ are turned on. A current generated by the motor *M*₄₂ for power generation flows in from the motor winding *N*_{*U*42}*,* and flows out from the motor winding *N*_{*V*42} and the motor winding *N*_{*W*42} to the positive bus BUS4+ and the negative bus BUS4-. In this circuit state, *I*_{*U*42} + *I*_{*V*42} *+ I*_{*W*42} = 0. In this case, the motor *M*₄₂ outputs a torque.

It should be noted that the drive current circuit in the electric drive system shown in FIG. 15A should be understood as an example. Because a direction of a current generated when the motor *M*₄₂ outputs a torque is random, the current generated by the motor *M*₄₂ may flow out from the motor winding *N*_{*U*42}*,* flow in from the motor winding *N*_{*V*42}*,* and flow in from the motor winding *N*_{*W*42}. Regardless of how a direction of a current of each motor winding changes, when the motor *M*₄₂ generates power, a sum of currents of the three motor windings is zero, that is, *I*_{*U*42} + *I*_{*V*42} + *I*_{*W*42} = 0.

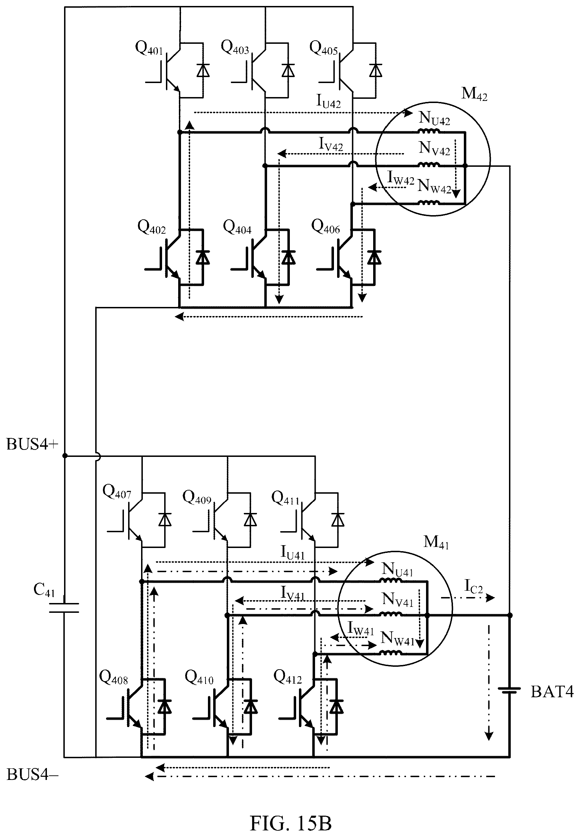

Within a time period between a moment t15 and a moment t16, in this case, all of the signal PWM_*Q*₄₀₇, the signal PWM_*Q*₄₀₉, and the signal PWM_*Q*₄₁₁ are at a low level. To be specific, the upper switching transistor Q₄₀₇, the upper switching transistor Q₄₀₉, and the upper switching transistor *Q*₄₁₁ are turned off, and the lower switching transistor *Q*₄₀₈, the lower switching transistor *Q*₄₁₀, and the lower switching transistor *Q*₄₁₂ are turned on. The powertrain may form a circuit state shown in FIG. 15B. As shown in FIG. 15B, currents of the generator windings cannot change abruptly, and directions of currents of the three generator windings are still the directions of the currents in the circuit state shown in FIG. 15A. To be specific, a current flowing through the generator winding *N*_{*U*41} is *I*_{*U*41} *+ I*_{*C*1}/3*,* a current flowing through the generator winding *N*_{*V*41} is *I*_{*V*41} *+ I*_{*C*1}/3*,* and a current flowing through the generator winding *N*_{*W*41} is *I*_{*W*41} *+ I*_{*C*1}/3*,* where *I*_{*U*41} *+ I*_{*V*41} *+ I*_{*W*41} = 0. In this case, the generator *M*₄₁ outputs a torque, and the three generator windings are in an energy storage stage. To be specific, in this case, a current of the three-phase winding of the generator includes a power generation current of the generator and a discharge current of the power battery.

In this case, a sum of currents of the three motor windings of the motor *M*₄₂ is still zero. For example, in FIG. 15B, the lower switching transistor *Q*₄₀₂, the lower switching transistor *Q*₄₀₄, and the lower switching transistor *Q*₄₀₆ are turned on, and the upper switching transistor *Q*₄₀₁, the upper switching transistor *Q*₄₀₃, and the upper switching transistor *Q*₄₀₅ are turned off. In this circuit state, *I*_{*U*42} *+ I*_{*V*42} *+ I*_{*W*42} = 0. In this case, the three motor windings are also in an energy storage stage.

To sum up, the preset target value *V*₄ is superposed on second modulated signals of the three first bridge arms. To be specific, the three first bridge arms in the GCU are reused for charge control of the power battery. In this embodiment of this application, turn-on time and turn-off time of a switching transistor corresponding to a first bridge arm are changed, to enable the generator to generate power, and charge the power battery at the same time. To be specific, the generator system can implement both a function of an AC/DC converter and a function of a buck converter. In this case, it can be understood that the charge current of the power battery BAT4 flows through each generator winding. To be specific, when the temperature of the electric drive system 402 is greater than first preset temperature, heat generated by the charge current of the power battery BAT4 is carried by the generator system 401, to avoid overheating of the electric drive system 402.

Optionally, in some feasible implementations, the preset target value *V*₄ (not shown in the figure) may be superposed on a second modulated signal/second modulated signals of one or two first bridge arms of the three bridge arms. To be specific, one or two bridge arms may be reused for charge control of the power battery. For example, the powertrain reuses one first bridge arm. That the powertrain sends the second charge reuse control signal to the generator system 401 may be specifically sending the signal PWM1_*Q*₄₀₇ obtained after the moment t13 to the upper switching transistor Q₄₀₇, sending the signal PWM1_*Q*₄₀₉ obtained before the moment t13 to the upper switching transistor Q₄₀₉, and sending the signal PWM1_*Q*₄₁₁ obtained before the moment t13 to the upper switching transistor *Q*₄₁₁*.* In this case, the circuit states in FIG. 15A and FIG. 15B may still be formed, the generator *M*₄₁ generates power, and the power battery BAT4 is in the charge state.

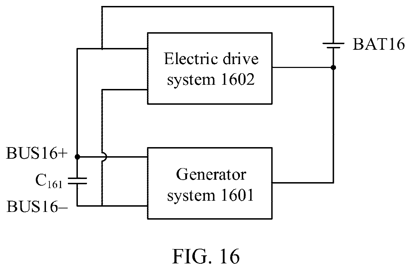

Optional, in some feasible implementations, FIG. 16 is a block diagram of another structure of a powertrain according to an embodiment of this application. As shown in FIG. 16, the powertrain provided in this embodiment of this application includes a generator system 1601 and an electric drive system 1602.

A first end of the generator system 1601 is connected to a positive bus BUS16+. A second end of the generator system 1601 is connected to a negative bus BUS16-. A third end of the generator system 1601 is connected to a negative terminal of a power battery BAT16. A positive terminal of the power battery BAT16 is connected to the positive bus BUS16+.

In addition, the powertrain further includes a bus capacitor unit connected between the positive bus BUS16+ and the negative bus BUS16-. It should be noted that, in this embodiment of this application, an example in which the bus capacitor unit includes one capacitor C₁₆₁ is used. In some feasible implementations, the bus capacitor unit may include at least two capacitors connected in series or in parallel. To be specific, a quantity of capacitors in the bus capacitor unit and a connection manner between capacitors are not limited in this embodiment of this application.

A first end of the electric drive system 1602 is connected to the positive bus BUS16+. A second end of the electric drive system 1602 is connected to the negative bus BUS16-. A third end of the electric drive system 1602 is connected to the third end of the generator system 1601. To be specific, the third end of the electric drive system 1602 is also connected to the negative terminal of the power battery BAT16.

A difference from the powertrain shown in FIG. 3 lies in that, in the powertrain provided in this embodiment of this application, the power battery is connected in a different manner. In the powertrain shown in FIG. 3, the positive terminal of the power battery is connected to the third end of the electric drive system and the third end of the generator system, and the negative terminal of the power battery is connected to the negative bus. However, in the powertrain shown in this embodiment of this application, the positive terminal of the power battery is connected to the positive bus, and the negative terminal of the power battery is connected to the third end of the electric drive system and the third end of the generator system. In this case, the beneficial effects of the powertrain shown in FIG. 3 can still be achieved.

For example, temperature of the generator system 1601 is greater than first preset temperature, and the powertrain is in the electric drive system reuse mode. The first preset temperature is temperature at which the generator system 1601 can operate safely, and the first preset temperature is related to a generator and a generator control unit (Generator Control Unit, GCU) in the generator system 1601. This may be understood as that the temperature of the generator system 1601 is greater than the safe operation temperature of the generator system 1601, and a charge circuit or a discharge circuit of the power battery is provided by the electric drive system 1602.

Similarly, when temperature of the electric drive system 1602 is greater than second preset temperature, the powertrain is in the generator system reuse mode. The second preset temperature is temperature at which the electric drive system 1602 can operate safely, and the second preset temperature is related to a motor and a motor control unit (Motor Control Unit, MCU) in the electric drive system 1602. This may be understood as that the temperature of the electric drive system 1602 is greater than the safe operation temperature of the electric drive system 1602, and a charge circuit or a discharge circuit of the power battery is provided by the generator system 1601.

Optionally, in some feasible implementations, if the temperature of the generator system 1601 is greater than the first preset temperature and the temperature of the electric drive system 1602 is greater than the second preset temperature, the powertrain sorts the generator system 1601 and the electric drive system 1602 by priority. For example, if a temperature tolerance capability of a component used in the generator system 1601 is weaker than a tolerance capability of a component used in the electric drive system 1602, the powertrain determines that a priority of the generator system 1601 is higher than a priority of the electric drive system 1602, and controls the powertrain to be in the electric drive system reuse mode. Alternatively, if a temperature tolerance capability of a component used in the generator system 1601 is stronger than a tolerance capability of a component used in the electric drive system 1602, the powertrain determines that a priority of the electric drive system 1602 is higher than a priority of the generator system 1601, and controls the powertrain to be in the generator system reuse mode.

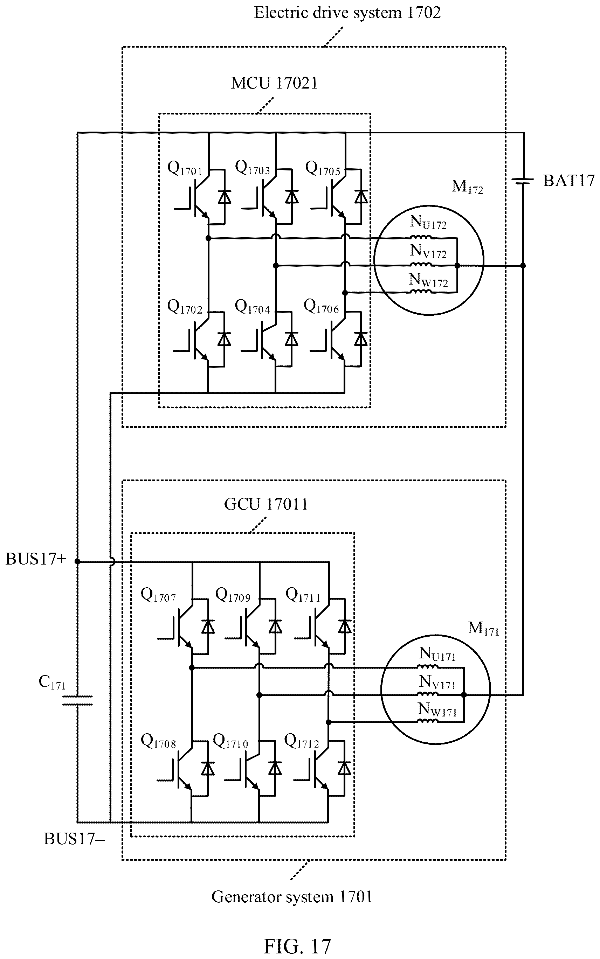

The following describes a specific structure of a powertrain by using an example with reference to FIG. 17.

For example, FIG. 17 is a schematic of a circuit of a powertrain according to an embodiment of this application. As shown in FIG. 17, the powertrain in this embodiment of this application includes a generator system 1701, an electric drive system 1702, and a bus capacitor unit (for example, a capacitor *C*₁₇₁).

The generator system 1701 includes a GCU 17011 and a generator *M*₁₇₁. The electric drive system 1702 includes an MCU 17021 and a motor *M*₁₇₂.

In the generator system 1701, the GCU 17011 includes three first bridge arms connected in parallel, and the generator *M*₁₇₁ includes three generator windings (for example, a generator winding *N*_{*U*171} *,* a generator winding *N*_{*V*171} *,* and a generator winding *N*_{*W*171} ) corresponding to the three first bridge arms. In this case, a collector of an upper switching transistor *Q*₁₇₀₇, a collector of an upper switching transistor *Q*₁₇₀₉, and a collector of an upper switching transistor *Q*₁₇₁₁ are a first end of the generator system 1701. To be specific, the collector of the upper switching transistor *Q*₁₇₀₇, the collector of the upper switching transistor *Q*₁₇₀₉, and the collector of the upper switching transistor *Q*₁₇₁₁ are connected to one end of the capacitor *C*₁₇₁. An emitter of a lower switching transistor *Q*₁₇₀₈, an emitter of a lower switching transistor *Q*₁₇₁₀, and an emitter of a lower switching transistor *Q*₁₇₁₂ are a second end of the generator system 1701. To be specific, the emitter of the lower switching transistor *Q*₁₇₀₈, the emitter of the lower switching transistor *Q*₁₇₁₀, and the emitter of the lower switching transistor *Q*₁₇₁₂ are connected to the other end of the capacitor *C*₁₇₁. An emitter of the upper switching transistor *Q*₁₇₀₇ and a collector of the lower switching transistor *Q*₁₇₀₈ are connected to one end of the generator winding *N*_{*U*171}*.* An emitter of the upper switching transistor *Q*₁₇₀₉ and a collector of the lower switching transistor *Q*₁₇₁₀ are connected to one end of the generator winding *N*_{*V*171}. An emitter of the upper switching transistor *Q*₁₇₁₁ and a collector of the lower switching transistor *Q*₁₇₁₂ are connected to one end of the generator winding *N*_{*W*171}*.* The other end of the generator winding *N*_{*U*171}*,* the other end of the generator winding *N*_{*V*171}*,* and the other end of the generator winding *N*_{*W*171} are a third end of the generator system 1701, and the third end may also be referred to as a center tap point of a three-phase winding of the generator. In this case, the center tap point of the three-phase winding of the generator is connected to a negative terminal of the power battery BAT17. To be specific, the other end of the generator winding *N*_{*U*171}*,* the other end of the generator winding *N*_{*V*171}*,* and the other end of the generator winding *N*_{*W*171} are connected to the negative terminal of the power battery BAT17, and a positive terminal of the power battery BAT17 is connected to a positive bus BUS17+.

In the electric drive system 1702, the MCU 17021 includes three second bridge arms connected in parallel, and the motor *M*₁₇₂ includes three motor windings (for example, a motor winding *N*_{*U*172}*,* a motor winding *N*_{*V*172}*,* and a motor winding *N*_{*W*172}) corresponding to the three second bridge arms. In this case, a collector of an upper switching transistor *Q*₁₇₀₁, a collector of an upper switching transistor *Q*₁₇₀₃, and a collector of an upper switching transistor *Q*₁₇₀₅ are a first end of the electric drive system 1702. To be specific, the collector of the upper switching transistor *Q*₁₇₀₁, the collector of the upper switching transistor *Q*₁₇₀₃, and the collector of the upper switching transistor *Q*₁₇₀₅ are connected to one end of the capacitor *C*₁₇₁. An emitter of a lower switching transistor *Q*₁₇₀₂, an emitter of a lower switching transistor *Q*₁₇₀₄*,* and an emitter of a lower switching transistor *Q*₁₇₀₆ are a second end of the electric drive system 1702. To be specific, the emitter of the lower switching transistor *Q*₁₇₀₂, the emitter of the lower switching transistor *Q*₁₇₀₄*,* and the emitter of the lower switching transistor *Q*₁₇₀₆ are connected to the other end of the capacitor *C*₁₇₁. An emitter of the upper switching transistor *Q*₁₇₀₁ and a collector of the lower switching transistor *Q*₁₇₀₂ are connected to one end of the motor winding *N*_{*U*172}. An emitter of the upper switching transistor *Q*₁₇₀₃ and a collector of the lower switching transistor *Q*₁₇₀₄ are connected to one end of the motor winding *N*_{*V*172}*.* An emitter of the upper switching transistor *Q*₁₇₀₅ and a collector of the lower switching transistor *Q*₁₇₀₆ are connected to one end of the motor winding *N*_{*W*172}*.* The other end of the motor winding *N*_{*U*172}*,* the other end of the motor winding *N*_{*V*172}*,* and the other end of the motor winding *N*_{*W*172} are a third end of the electric drive system 1702, and the third end may also be referred to as a center tap point of a three-phase winding of the motor. In this case, the center tap point of the three-phase winding of the motor is connected to the negative terminal of the power battery BAT17. To be specific, the other end of the motor winding *N*_{*U*172}*,* the other end of the motor winding *N*_{*V*172}*,* and the other end of the motor winding *N*_{*W*172} are connected to the negative terminal of the power battery BAT17.

It should be noted that, in FIG. 17, an example in which the generator *M*₁₇₁ is specifically implemented as a three-phase alternating-current generator and the motor *M*₁₇₂ is specifically implemented as a three-phase alternating-current motor is used. In some feasible implementations, the generator in the generator system may be a two-phase alternating-current generator, a four-phase alternating-current generator, a five-phase alternating-current generator, or the like. In this case, the GCU adaptively changes a quantity of bridge arms based on a quantity of generator windings in different types of generators. For example, when the generator is a two-phase alternating-current generator, the GCU includes two-phase bridge arms; or when the generator is a four-phase alternating-current generator, the GCU includes four-phase bridge arms.

Similarly, the motor in the electric drive system may be a two-phase alternating-current motor, a four-phase alternating-current motor, a five-phase alternating-current motor, or the like. In this case, the MCU adaptively changes a quantity of bridge arms based on a quantity of generator windings in different types of generators. For example, when the motor is a two-phase alternating-current motor, the MCU includes two-phase bridge arms; or when the generator is a four-phase alternating-current motor, the MCU includes four-phase bridge arms.

Optionally, the GCU and the MCU shown in FIG. 17 are described by using two-level bridge arms as an example. In some feasible implementations, the bridge arms in the GCU and the MCU may be specifically implemented as three-level bridge arms, four-level bridge arms, or five-level bridge arms. For details, refer to the conventional technology. Details are not described herein again.

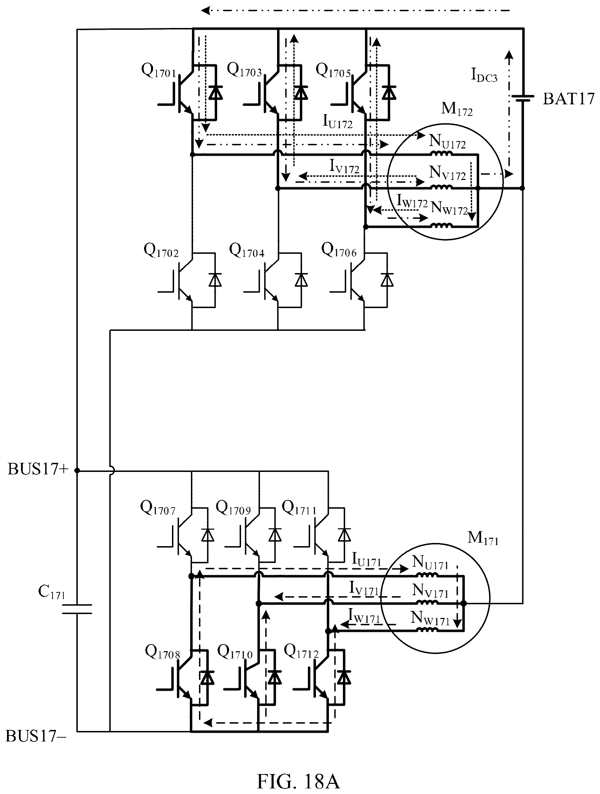

With reference to FIG. 18A to FIG. 19B, the following describes in detail how to specifically control the powertrain shown in FIG. 17 to be in an electric drive system reuse mode.

It can be understood that the powertrain may still control, through the method process shown in FIG. 5, the powertrain shown in FIG. 17 to be in the electric drive system reuse mode. Specifically, the following steps are performed.

S501: The powertrain determines that temperature of the generator system 1701 is greater than first preset temperature. During specific implementation, the generator *M*₁₇₁ of the generator system 1701 is provided with a temperature sensor, or the GCU 17011 is also provided with a temperature sensor. The powertrain may use actual temperature of the generator *M*₁₇₁ or actual temperature of the GCU 17011 as the temperature of the generator system 1701. To be specific, the powertrain compares either the actual temperature of the generator *M*₁₇₁ or the actual temperature of the GCU 17011 with the first preset temperature.

For example, if the powertrain uses the actual temperature of the generator *M*₁₇₁ as the temperature of the generator system 1701, the first preset temperature may be rated temperature of the generator *M*₁₇₁, and the powertrain compares the actual temperature of the generator *M*₁₇₁ with the rated temperature of the generator *M*₁₇₁. Alternatively, the powertrain uses the actual temperature of the GCU 17011 as the temperature of the generator system 1701, and the first preset temperature may be rated temperature of each switching transistor in the GCU 17011. In this case, the powertrain compares the actual temperature of the GCU 17011 with the rated temperature of each switching transistor in the GCU 17011.

When either the actual temperature of the generator *M*₁₇₁ or the actual temperature of the GCU 17011 is greater than the first preset temperature, the powertrain determines that the temperature of the generator system 1701 is greater than the first preset temperature.

It should be noted that, in this embodiment of this application, the steps performed by the powertrain may be specifically performed by a controller in the GCU, or may be performed by a controller in the MCU, or may be jointly performed by a controller in the GCU and a controller in the MCU through communication.

S502: The powertrain detects whether remaining power of the power battery BAT17 is greater than or equal to first preset power. If the remaining power of the power battery BAT17 is greater than or equal to the first preset power, the powertrain performs step S503a; otherwise, the powertrain performs step S503b.

During specific implementation, the remaining power of the power battery BAT17 may be detected by a battery management system (Battery Management System, BMS) in real time, and the powertrain obtains the remaining power of the power battery BAT17 from the BMS.

The first preset power is a preset value, and a value of the first preset power may be determined based on a specific practice. For example, the value of the first preset power is related to a battery type of the power battery BAT17.

S503a: The powertrain sends a first discharge reuse control signal to the electric drive system 1702, and sends a first power generation control signal to the generator system 1701. In this case, the powertrain is in an electric drive system discharge reuse mode of the electric drive system reuse mode.

For example, the first discharge reuse control signal may be specifically shown in FIG. 6. To be specific, that the powertrain sends the first discharge reuse control signal to the electric drive system 1702 is specifically sending the signal PWM1_*Q*₄₀₁ obtained after the moment t1 to the upper switching transistor *Q*₁₇₀₁, sending the signal PWM1_*Q*₄₀₃ obtained after the moment t1 to the upper switching transistor *Q*₁₇₀₃, and sending the signal PWM1_*Q*₄₀₅ obtained after the moment t1 to the upper switching transistor *Q*₁₇₀₅.

The powertrain sends the first power generation control signal to the generator system 1701, where the first power generation control signal may be determined based on an operation parameter of the generator *M*₁₇₁ and the bus voltage. For a specific implementation, refer to a manner of controlling power generation of an existing generator. Details are not described herein.

In this case, the generator system 1701 generates power, and the power battery BAT17 discharges through the electric drive system 1702. The generator system 1701 and the power battery BAT17 jointly output a first bus voltage between a positive bus BUS17+ and the negative bus BUS17-. The MCU 17021 drives, based on the first bus voltage, the motor *M*₁₇₂ to output a torque, to drive a vehicle. That is, the power battery BAT17 and the generator system 1701 jointly provide a drive voltage for the motor *M*₁₇₂. In this case, a first bridge arm and a motor winding connected to the first bridge arm can ensure a function of the electric drive system, to be specific, can implement a function of a DC/AC converter. In addition, the first bridge arm and the motor winding corresponding to the first bridge arm can implement a function of a DC/DC converter, and specifically, implement a boost function of the DC/DC converter, that is, a boost converter.

For example, a time period between the moment t1 and a moment t2 is used as an example. In this case, all of the signal PWM1_*Q*₄₀₁, the signal PWM1_*Q*₄₀₃, and the signal PWM1_*Q*₄₀₅ are at a high level. To be specific, the switching transistor *Q*₁₇₀₁, the switching transistor *Q*₁₇₀₃, and the switching transistor *Q*₁₇₀₅ are turned on. Because the powertrain controls signals of two switching transistors in a same bridge arm to be complementary, in this case, the switching transistor *Q*₁₇₀₂, the switching transistor *Q*₁₇₀₄*,* and the switching transistor *Q*₁₇₀₆ are turned off, and the powertrain may form a circuit state shown in FIG. 18A. As shown in FIG. 18A, a current flowing through the motor winding *N*_{*U*172} is *I*_{*U*172} + *I*_{*DC*3}/3*,* a current flowing through the motor winding *N*_{*V*172} is *I*_{*V*172} *+ I*_{*DC*3}/3*,* and a current flowing through the motor winding *N*_{*W*172} is *I*_{*W*172} *+ I*_{*DC*3}/3*,* where *I*_{*U*172} + *I*_{*V*172} *+ I*_{*W*172} *=* 0. In this case, the motor *M*₁₇₂ outputs a torque, the three motor windings are in an energy storage stage, and the power battery BAT3 is in a discharge state. To be specific, in this case, a current of the three-phase winding of the motor includes a drive current of the motor and a discharge current of the power battery.

In this case, a sum of currents of the three generator windings of the generator *M*₄₁ is still zero. For example, in FIG. 18A, the lower switching transistor *Q*₁₇₀₈, the lower switching transistor *Q*₁₇₁₀, and the lower switching transistor *Q*₁₇₁₂ are turned on, and the upper switching transistor *Q*₁₇₀₇, the upper switching transistor *Q*₁₇₀₉, and the upper switching transistor *Q*₁₇₁₁ are turned off. A current generated by the generator *M*₁₇₁ for power generation flows in from the generator winding *N*_{*U*171}*,* and passes through the generator winding *N*_{*V*171} and the generator winding *N*_{*W*171} to form a closed loop. In this circuit state, *I*_{*U*171} + *I*_{*V*171} + *I*_{*W*171} = 0. In this case, the three generator windings are also in an energy storage stage.

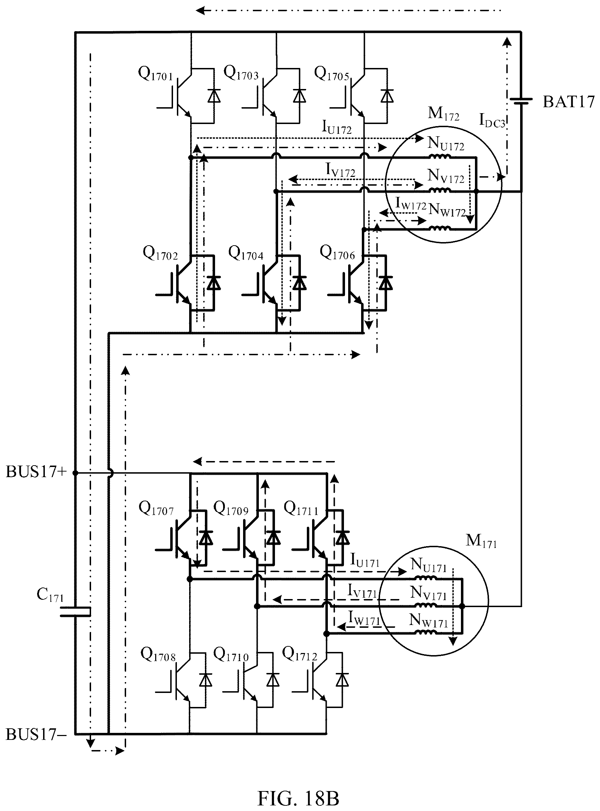

Within a time period between a moment t3 and a moment t4, in this case, all of the signal PWM1_*Q*₄₀₁, the signal PWM1_*Q*₄₀₃, and the signal PWM1_*Q*₄₀₅ are at a low level. To be specific, the upper switching transistor *Q*₁₇₀₁, the upper switching transistor *Q*₁₇₀₃, and the upper switching transistor *Q*₁₇₀₅ are turned off, and the lower switching transistor *Q*₁₇₀₂, the lower switching transistor *Q*₁₇₀₄*,* and the lower switching transistor *Q*₁₇₀₆ are turned on. The powertrain may form a circuit state shown in FIG. 18B. As shown in FIG. 18B, currents of the motor windings cannot change abruptly, and directions of currents of the three motor windings are still the directions of the currents in the circuit state shown in FIG. 18A. In this case, a current flowing through the motor winding *N*_{*U*172} is *I*_{*U*172} + *I*_{*DC*3}/3*,* a current flowing through the motor winding *N*_{*V*172} is *I*_{*V*172} + *I*_{*DC*3}/3*,* and a current flowing through the motor winding *N*_{*W*172} is *I*_{*W*172} *+ I*_{*DC*3}/3*,* where *I*_{*U*172} + *I*_{*V*172} *+ I*_{*W*172} *=* 0 . In this case, the motor *M*₁₇₂ outputs a torque. In addition, the power battery BAT17 discharges through the motor winding *N*_{*U*172}*,* the motor winding *N*_{*V*172}*,* and the motor winding *N*_{*W*172}*.* That is, the power battery BAT17 is in a discharge state. A discharge current is *I*_{*DC*3}.

It should be noted that a direction of a current in a process of outputting the torque by the motor *M*₁₇₂ is random, and the current may flow in from the motor winding *N*_{*U*172} and the motor winding *N*_{*V*172},and flow out from the motor winding *N*_{*W*172}*.* Regardless of how a direction of a current of each motor winding changes, a sum of currents of the three motor windings is zero, that is, *I*_{*U*172} + *I*_{*V*172} + *I*_{*W*172} = 0.

Within the time period between the moment t3 and the moment t4, both the generator *M*₁₇₁ and the power battery BAT17 drive the motor *M*₁₇₂. In this case, the powertrain sends the first power generation control signal to the generator system 1701, a sum of currents of the three generator windings of the generator *M*₁₇₁ is zero, and the generator *M*₁₇₁ generates power. For example, in FIG. 18B, the lower switching transistor *Q*₁₇₀₈, the lower switching transistor *Q*₁₇₁₀, and the lower switching transistor *Q*₁₇₁₂ are turned off, and the upper switching transistor *Q*₁₇₀₇, the upper switching transistor *Q*₁₇₀₉, and the upper switching transistor *Q*₁₇₁₁ are turned on. A current generated by the generator *M*₁₇₁ for power generation flows in from the generator winding *N*_{*U*171}*,* and flows out from the generator winding *N*_{*V*171} and the generator winding *N*_{*W*171} to the positive bus BUS17+ and the negative bus BUS17-. In this circuit state, *I*_{*U*171} *+ I*_{*V*171} *+ I*_{*W*171} = 0. In this case, the generator *M*₁₇₁ generates power.

It should be noted that the power generation current circuit in the generator system shown in FIG. 18B should be understood as an example. Because a direction of a current generated when the generator *M*₁₇₁ generates power is random, the current generated by the generator may flow out from the generator winding *N*_{*U*171}*,* flow in from the generator winding *N*_{*V*171}*,* and flow in from the generator winding *N*_{*W*171}. Regardless of how a direction of a current of each generator winding changes, when the generator *M*₁₇₁ generates power, a sum of currents of the three generator windings is zero, that is, *I*_{*U*171} + *I*_{*V*171} + *I*_{*W*171} = 0. To sum up, the preset target value *V*₁ is subtracted from a second modulated signal of one first bridge arm of the three bridge arms. To be specific, one of the three bridge arms in the MCU is reused for discharge control of the power battery. In this embodiment of this application, turn-on time and turn-off time of a switching transistor corresponding to a first bridge arm are changed, to enable the motor to output a torque and the power battery to discharge at the same time. To be specific, the electric drive system can implement both a function of a boost converter and a function of a DC/AC converter. In this case, it can be understood that the discharge current of the power battery BAT17 flows through each motor winding. To be specific, when the temperature of the generator system 1701 is greater than the first preset temperature, heat generated by the discharge current of the power battery BAT17 is carried by the electric drive system 1702, to avoid overheating of the generator system 1701. In addition, the power battery BAT17 may also supply electric energy to the motor *M*₁₇₂. This further relieves pressure of the generator system 1701 to supply electric energy, and reduces heat generated by the generator system 1701.

Optionally, in some feasible implementations, the preset target value *V*₁ (not shown in the figure) may be subtracted from a second modulated signal/second modulated signals of one or two of the three second bridge arms. To be specific, one or two second bridge arms may be reused for discharge control of the power battery. For example, the powertrain reuses one second bridge arm. That the powertrain sends the first discharge reuse control signal to the electric drive system 1702 may be specifically sending the signal PWM1_*Q*₁₇₀₁ obtained after the moment t1 to the upper switching transistor *Q*₁₇₀₁, sending the signal PWM1_*Q*₁₇₀₃ obtained before the moment t1 to the upper switching transistor *Q*₁₇₀₃, and sending the signal PWM1_*Q*₁₇₀₅ obtained before the moment t1 to the upper switching transistor Q₁₇₀₅. In this case, the circuit states in FIG. 18A and FIG. 18B may still be formed, the motor *M*₁₇₂ outputs a torque, and the power battery BAT17 is in the discharge state.

Optionally, in some feasible implementations, the powertrain monitors a vehicle speed, and when the vehicle speed increases to a preset speed threshold and the temperature of the generator system 1701 is greater than the first preset temperature, if the remaining power of the power battery BAT17 is greater than or equal to the first preset power, the powertrain performs step S503a. In this case, the vehicle speed is high, and the power battery BAT17 and the generator *M*₁₇₁ jointly drive the motor *M*₁₇₂.

Optionally, in some feasible implementations, the motor *M*₁₇₂ may not output a torque, and the power battery BAT17 is in the discharge state. For example, in this case, the power battery BAT17 outputs a voltage between the positive bus BUS17+ and the negative bus BUS17-. In this case, the power battery may provide power for the generator *M*₁₇₁, and during rotation, the generator *M*₁₇₁ drives an internal combustion engine to ignite, to start the generator *M*₁₇₁ to convert mechanical energy into electric energy.

In this case, the powertrain may determine at least one second bridge arm from the three bridge arms of the MCU 17021, and determine a second PWM signal of each second bridge arm based on the bus voltage and the voltage of the power battery BAT17.

It can be understood that, for a specific implementation of determining, by the powertrain, the second PWM signal based on the bus voltage and the voltage of the power battery BAT17, reference may be made to a manner of determining a control signal of a switching transistor in an existing boost converter. Details are not described herein.

S503b: The powertrain sends a first charge reuse control signal to the electric drive system 1702, and sends a second power generation control signal to the generator system 1701. In this case, the powertrain is in an electric drive system charge reuse mode of the electric drive system reuse mode.

For example, the first charge reuse control signal may be specifically shown in FIG. 8. That the powertrain sends the first charge reuse control signal to the electric drive system 1702 is specifically sending the signal PWM_*Q*₄₀₁ obtained after the moment t5 to the upper switching transistor *Q*₁₇₀₁, sending the signal PWM_*Q*₄₀₃ obtained after the moment t5 to the upper switching transistor *Q*₁₇₀₃, sending the signal PWM_*Q*₄₀₅ obtained after the moment t5 to the upper switching transistor *Q*₁₇₀₅.

The powertrain sends the second power generation control signal to the generator system 1701, where the second power generation control signal may be determined based on an operation parameter of the generator *M*₁₇₁ and the bus voltage. For a specific implementation, refer to a manner of controlling power generation of an existing generator. Details are not described herein.

For example, the second power generation control signal may be the same as the first power generation control signal. To be specific, when the power battery BAT17 is in a charge state or the discharge state, the generator system 1701 outputs same power between the positive bus BSU17+ and the negative bus BUS17-. Alternatively, the second power generation control signal is different from the first power generation control signal, and the second power generation control signal may control power output by the generator system 1701 between the positive bus BSU17+ and the negative bus BUS17- to be greater than power output by the generator system 1701 between the positive bus BSU17+ and the negative bus BUS17- under the control of the first power generation control signal.

In this case, the generator system 1701 generates power, and outputs a second bus voltage between the positive bus BUS17+ and the negative bus BUS17-. The MCU 17021 drives, based on the second bus voltage, the motor *M*₁₇₂ to output a torque and charge the power battery BAT17. That is, the generator system 1701 provides both a drive voltage for the motor *M*₁₇₂ and a charge voltage for the power battery BAT17. In this case, a first bridge arm and a motor winding connected to the first bridge arm can ensure a function of the electric drive system of the motor, to be specific, can implement a function of a DC/AC converter. In addition, the first bridge arm and the motor winding connected to the first bridge arm can implement a function of a DC/DC converter, and specifically, implement a buck function of the DC/DC converter, that is, a buck converter.

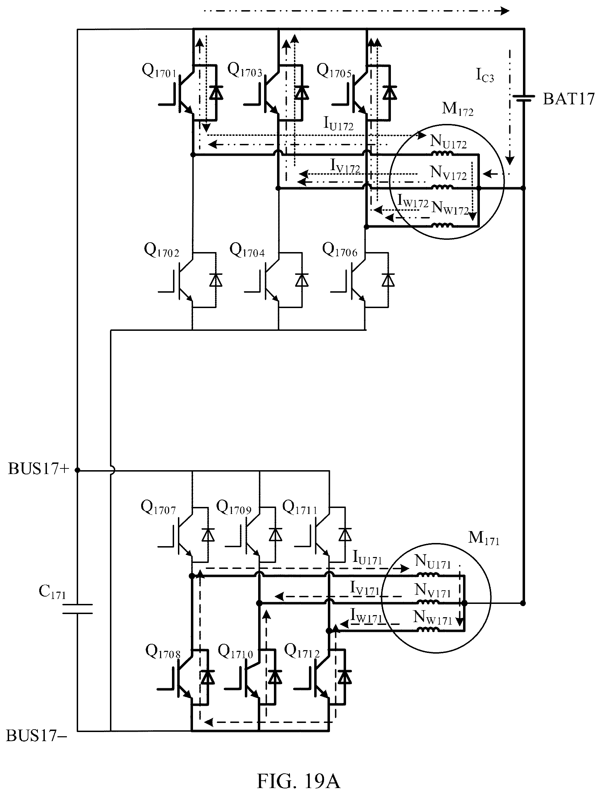

For example, a time period between the moment t5 and a moment t6 is used as an example. In this case, all of the signal PWM_*Q*₄₀₁, the signal PWM_*Q*₄₀₃, and the PWM_*Q*₄₀₅ are at a high level. To be specific, the upper switching transistor *Q*₁₇₀₁, the upper switching transistor *Q*₁₇₀₃, and the upper switching transistor *Q*₁₇₀₅ are turned on, and the lower switching transistor *Q*₁₇₀₂, the lower switching transistor *Q*₁₇₀₄, and the lower switching transistor *Q*₁₇₀₆ are turned off. The powertrain may form a circuit state shown in FIG. 19A. As shown in FIG. 19A, a current flowing through the motor winding *N*_{*U*172} is *I*_{*U*172} + *I_{C3}*/3, a current flowing through the motor winding *N*_{*V*172} is *I*_{*V*172} + *I_{C3}*/3, and a current flowing through the motor winding *N*_{*W*172} is *I*_{*W*172} *+ I_{C3}*/3, where *I*_{*U*172} + *I*_{*V*172} + *I*_{*W*172} *=* 0. In this case, the three motor windings are in an energy storage stage, and the power battery BAT17 is in a charge state.

In this case, a sum of currents of the three generator windings of the generator *M*₁₇₁ is still zero. For example, in FIG. 19A, the lower switching transistor *Q*₁₇₀₈, the lower switching transistor *Q*₁₇₁₀, and the lower switching transistor *Q*₁₇₁₂ are turned on, and the upper switching transistor *Q*₁₇₀₇, the upper switching transistor *Q*₁₇₀₉, and the upper switching transistor *Q*₁₇₁₁ are turned off. A current generated by the generator *M*₁₇₁ for power generation flows in from the generator winding *N*_{*U*171}*,* and passes through the generator winding *N*_{*V*171} and the generator winding *N*_{*W*171} to form a closed loop. In this circuit state, *I*_{*U*171} + *I*_{*V*171} + *I*_{*W*171} = 0. In this case, the three generator windings are also in an energy storage stage.

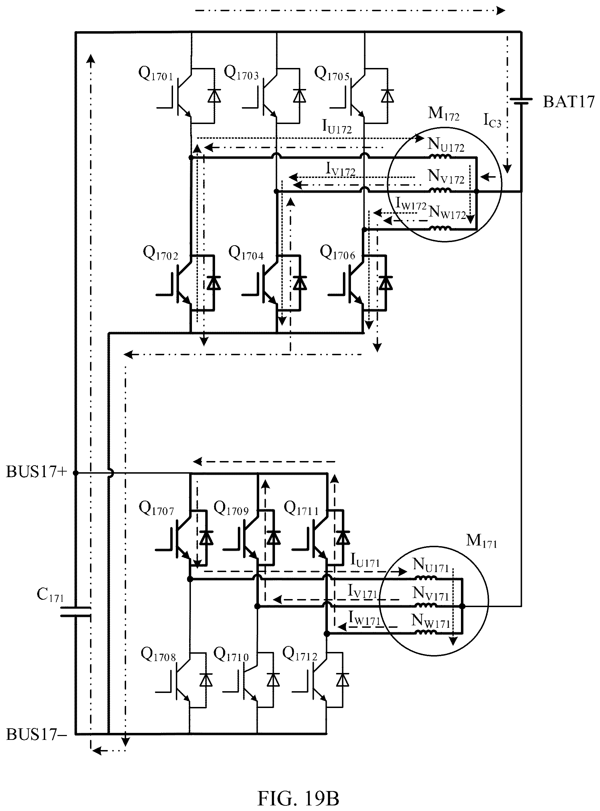

Within a time period between a moment t7 and a moment t8, in this case, all of the signal PWM_*Q*₄₀₁, the signal PWM_*Q*₄₀₃, and the signal PWM_*Q*₄₀₅ are at a low level. To be specific, the upper switching transistor *Q*₁₇₀₁, the upper switching transistor *Q*₁₇₀₃, and the upper switching transistor *Q*₁₇₀₅ are turned off, and the lower switching transistor *Q*₁₇₀₂, the lower switching transistor *Q*₁₇₀₄, and the lower switching transistor *Q*₁₇₀₆ are turned on. The powertrain may form a circuit state shown in FIG. 19B. As shown in FIG. 19B, currents of the motor windings cannot change abruptly, and directions of currents of the three motor windings are still the directions of the currents in the circuit state shown in FIG. 19A. In this case, a current flowing through the motor winding *N*_{*U*172} is *I*_{*U*172} + *I*_{*C*3}/3, a current flowing through the motor winding *N*_{*V*172} is *I*_{*V*172} + *I*_{*C*3}/3, and a current flowing through the motor winding *N*_{*W*172} is *I*_{*W*172} *+ I*_{*C*3}/3, where *I*_{*U*172} + *I*_{*V*172} + *I*_{*W*172} = 0. In this case, the motor *M*₁₇₂ outputs a torque, and the generator system 1701 charges the power battery BAT17 through the motor winding *N*_{*U*172}, the motor winding *N*_{*V*172}, and the motor winding *N*_{*W*172}. That is, the power battery BAT17 is in a charge state. A charge current is *I*_{*C*3}. To be specific, in this case, a current of the three-phase winding of the motor includes a drive current of the motor and the charge current of the power battery.

In this case, the powertrain sends the second power generation control signal to the generator system 1701, a sum of currents of the three generator windings of the generator *M*₁₇₁ is zero, and the generator *M*₁₇₁ generates power. For example, in FIG. 19B, the upper switching transistor *Q*₁₇₀₇, the upper switching transistor *Q*₁₇₀₉, and the upper switching transistor *Q*₁₇₁₁ are turned on, and the lower switching transistor *Q*₁₇₀₈, the lower switching transistor *Q*₁₇₁₀, and the lower switching transistor *Q*₁₇₁₁ are turned off. A current generated by the generator *M*₁₇₁ for power generation flows in from the generator winding *N*_{*U*171}, and flows out from the generator winding *N*_{*V*171} and the generator winding *N*_{*W*171} to the positive bus BUS17+ and the negative bus BUS17-. In this circuit state, *I*_{*U*171} + *I*_{*V*171} + *I*_{*W*171} = 0. In this case, the generator *M*₁₇₁ generates power.

It should be noted that the power generation current circuit in the generator system shown in FIG. 19B should be understood as an example. Because a direction of a current generated when the generator *M*₁₇₁ generates power is random, the current generated by the generator may flow out from the generator winding *N*_{*U*171}*,* flow in from the generator winding *N*_{*V*171}, and flow in from the generator winding *N*_{*W*171}. Regardless of how a direction of a current of each generator winding changes, when the generator *M*₁₇₁ generates power, a sum of currents of the three generator windings is zero, that is, *I*_{*U*171} + *I*_{*V*171} + *I*_{*W*171} = 0.

To sum up, the preset target value *V*₂ is superposed on second modulated signals of the three first bridge arms. To be specific, the three first bridge arms in the MCU are reused for charge control of the power battery. In this embodiment of this application, turn-on time and turn-off time of a switching transistor corresponding to a first bridge arm are changed, to enable the motor to output a torque, and charge the power battery at the same time. To be specific, the electric drive system can implement both a function of a DC/AC converter and a function of a buck converter. In this case, it can be understood that the charge current of the power battery BAT17 flows through each motor winding. To be specific, when the temperature of the generator system 1701 is greater than the first preset temperature, heat generated by the charge current of the power battery BAT17 is carried by the electric drive system 1702, to avoid a case that the generator system 1701 needs to not only supply electric energy to the power battery BAT, but also carry heat generated by the charge current of the power battery BAT17.

Optionally, in some feasible implementations, the preset target value *V*₂ (not shown in the figure) may be subtracted from a second modulated signal/second modulated signals of one or two of the three bridge arms. To be specific, one or two bridge arms may be reused for discharge control of the power battery. For example, the powertrain reuses one first bridge arm. That the powertrain sends the first charge reuse control signal to the electric drive system 1702 is specifically sending the signal PWM 1_*Q*₁₇₀₁ obtained after the moment t5 to the upper switching transistor *Q*₁₇₀₁, sending the signal PWM1_*Q*₁₇₀₃ obtained before the moment t5 to the upper switching transistor *Q*₁₇₀₃, and sending the signal PWM1_*Q*₁₇₀₅ obtained before the moment t5 to the upper switching transistor *Q*₁₇₀₅. In this case, the circuit states in FIG. 19A and FIG. 19B may still be formed, the motor *M*₁₇₂ outputs a torque, and the power battery BAT17 is in the charge state.

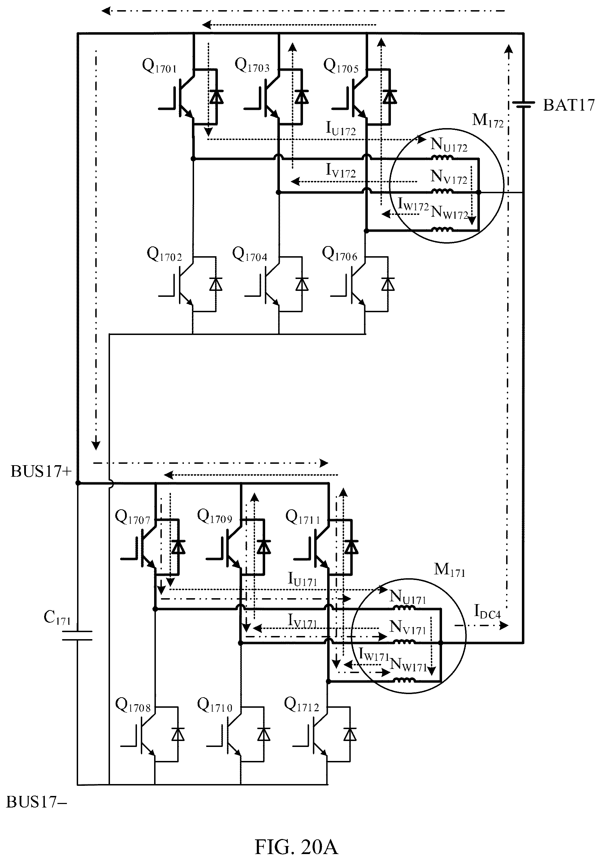

With reference to FIG. 20A to FIG. 21B, the following describes in detail how to specifically control the powertrain shown in FIG. 17 to be in a generator system reuse mode.

It can be understood that the powertrain may still control, through the method process shown in FIG. 11, the powertrain shown in FIG. 17 to be in the generator system reuse mode. Specifically, the following steps are performed.

S1101: The powertrain determines that temperature of the electric drive system 1702 is greater than second preset temperature. During specific implementation, the motor *M*₁₇₂ of the electric drive system 1702 is provided with a temperature sensor, or the MCU 17021 is also provided with a temperature sensor. The powertrain may use actual temperature of the motor *M*₁₇₂ or actual temperature of the MCU 17021 as the temperature of the electric drive system 1702. To be specific, the powertrain compares either the actual temperature of the motor *M*₁₇₂ or the actual temperature of the MCU 17021 with the second preset temperature.

For example, if the powertrain uses the actual temperature of the motor *M*₁₇₂ as the temperature of the electric drive system 1702, the second preset temperature may be rated temperature of the motor *M*₁₇₂, and the powertrain compares the actual temperature of the motor *M*₁₇₂ with the rated temperature of the motor *M*₁₇₂. Alternatively, the powertrain uses the actual temperature of the MCU 17021 as the temperature of the electric drive system 1702, and the second preset temperature may be rated temperature of each switching transistor in the MCU 17021. In this case, the powertrain compares the actual temperature of the MCU 17021 with the rated temperature of each switching transistor in the MCU 17021.

When either the actual temperature of the motor *M*₁₇₂ or the actual temperature of the MCU 17021 is greater than the second preset temperature, the powertrain determines that the temperature of the electric drive system 1702 is greater than the second preset temperature.

It should be noted that, in this embodiment of this application, the steps performed by the powertrain may be specifically performed by a controller in the MCU, or may be performed by a controller in the GCU, or may be jointly performed by a controller in the GCU and a controller in the MCU through communication.

S1102: The powertrain detects whether remaining power of the power battery BAT17 is greater than or equal to first preset power. If the remaining power of the power battery BAT17 is greater than or equal to the first preset power, the powertrain performs step S1103a; otherwise, the powertrain performs step S1103b.

S1103a: The powertrain sends a second discharge reuse control signal to the generator system 1701, and sends a first drive control signal to the electric drive system 1702. In this case, the powertrain is in a generator system discharge reuse mode of the generator system reuse mode.

For example, the first discharge reuse control signal may be specifically shown in FIG. 12. To be specific, that the powertrain sends the second discharge reuse control signal to the generator system 1701 is specifically sending the signal PWM1_*Q*₄₀₇ obtained after the moment t9 to the switching transistor *Q*₁₇₀₇, sending the signal PWM1_*Q*₄₀₉ obtained after the moment t9 to the upper switching transistor *Q*₁₇₀₉, and sending the signal PWM1_*Q*₄₁₁ obtained after the moment t9 to the upper switching transistor *Q*₄₁₁.

The powertrain sends the first drive control signal to the electric drive system 1702, where the first drive control signal may be determined based on an operation parameter of the motor *M*₁₇₂ and the bus voltage. For a specific implementation, refer to a manner of controlling driving of an existing motor. Details are not described herein.

In this case, the generator system 1701 generates power, the power battery BAT17 discharges through the generator system 1701, and a third bus voltage is output between the positive bus BUS17+ and the negative bus BUS17-. The MCU 17021 drives, based on the third bus voltage, the motor *M*₁₇₂ to output a torque, to drive a vehicle. That is, the power battery BAT17 and the generator system 1701 jointly provide a drive voltage for the motor *M*₁₇₂. In this case, a first bridge arm and a generator winding connected to the first bridge arm can ensure a power generation function of the generator system, to be specific, can implement a function of an AC/DC converter. In addition, the first bridge arm and the generator winding corresponding to the first bridge arm can implement a function of a DC/DC converter, and specifically, implement a boost function of the DC/DC converter, that is, a boost converter.

For example, a time period between the moment t9 and a moment t10 is used as an example. In this case, all of the signal PWM1_*Q*₄₀₇, the signal PWM1_*Q*₄₀₉, and the signal PWM1_*Q*₄₁₁ are at a high level. To be specific, the upper switching transistor *Q*₁₇₀₇, the upper switching transistor *Q*₁₇₀₉, and the upper switching transistor *Q*₁₇₁₁ are turned on. Because the powertrain controls signals of two switching transistors in a same bridge arm to be complementary, in this case, the lower switching transistor *Q*₁₇₀₈, the lower switching transistor *Q*₁₇₁₀, and the lower switching transistor *Q*₁₇₁₂ are turned off, and the powertrain may form a circuit state shown in FIG. 20A. As shown in FIG. 20A, assuming that three generator windings have same inductive reactance, a current flowing through the generator winding *N*_{*U*171} is *I*_{*U*171} + *I*_{*DC*4}/3, a current flowing through the generator winding *N*_{*V*171} is *I*_{*V*171} *+ I*_{*DC*4}/3*,* and a current flowing through the generator winding *N*_{*W*171} is *I*_{*W*171} + *I*_{*D*C4}/3, where *I*_{*U*171} + *I*_{*V*171} + *I*_{*W*171} = 0. In this case, the generator *M*₁₇₁ generates power. In addition, the power battery BAT17 discharges through the generator winding *N*_{*U*171}, the generator winding *N*_{*V*171}, and the generator winding *N*_{*W*171}. That is, the power battery BAT17 is in a discharge state. A discharge current is *I*_{*DC*4}.

It should be noted that a direction of a current in a process of outputting the torque by the generator *M*₁₇₁ is random, and the current may flow in from the generator winding *N*_{*U*171} and the generator winding *N*_{*V*171}, and flow out from the generator winding *N*_{*W*171}. Regardless of how a direction of a current of each generator winding changes, a sum of currents of the three generator windings is zero, that is, *I*_{*U*171} + *I*_{*V*171} *+ I*_{*W*171} = 0.

In this case, the powertrain sends the first drive control signal to the electric drive system 1702, a sum of currents of the three motor windings of the motor *M*₁₇₂ is zero, and the motor *M*₁₇₂ generates power. For example, in FIG. 20A, the lower switching transistor *Q*₁₇₀₂, the lower switching transistor *Q*₁₇₀₄, and the lower switching transistor *Q*₁₇₀₆ are turned off, and the upper switching transistor *Q*₁₇₀₁, the upper switching transistor *Q*₁₇₀₃, and the upper switching transistor *Q*₁₇₀₅ are turned on. A current generated by the motor *M*₁₇₂ for power generation flows in from the motor winding *N*_{*U*172}*,* and flows out from the motor winding *N*_{*V*172} and the motor winding *N*_{*W*172} to the positive bus BUS17+ and the negative bus BUS17-. In this circuit state, *I*_{*U*172} + *I*_{*V*172} + *I*_{*W*172} = 0. In this case, the motor *M*₁₇₂ outputs a torque.

It should be noted that the drive current circuit in the electric drive system shown in FIG. 20A should be understood as an example. Because a direction of a current generated when the motor *M*₁₇₂ outputs a torque is random, the current generated by the motor *M*₁₇₂ may flow out from the motor winding *N*_{*U*172}, flow in from the motor winding *N*_{*V*172}, and flow in from the motor winding *N*_{*W*172}. Regardless of how a direction of a current of each motor winding changes, when the motor *M*₁₇₂ outputs a torque, a sum of currents of the three motor windings is zero, that is, *I*_{*U*172} + *I*_{*V*172} + *I*_{*W*172} = 0.

To sum up, within the time period between the moment t9 and the moment t10, both the generator *M*₁₇₁ and the power battery BAT17 drive the motor *M*₁₇₂.

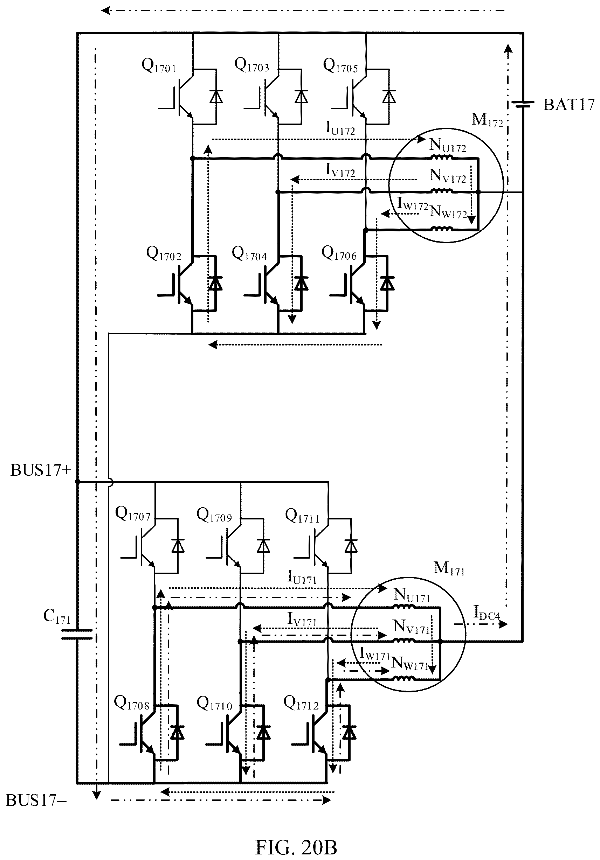

Within a time period between a moment t11 and a moment t12, in this case, all of the signal PWM1_*Q*₄₀₇, the signal PWM1_*Q*₄₀₉, and the signal PWM1_*Q*₄₁₁ are at a low level. To be specific, the upper switching transistor *Q*₁₇₀₇, the upper switching transistor *Q*₁₇₀₉, and the upper switching transistor *Q*₁₇₁₁ are turned off, and the lower switching transistor *Q*₁₇₀₈, the lower switching transistor *Q*₁₇₁₀, and the lower switching transistor *Q*₁₇₁₂ are turned on. The powertrain may form a circuit state shown in FIG. 20B. As shown in FIG. 20B, currents of the generator windings cannot change abruptly, and directions of currents of the three generator windings are still the directions of the currents in the circuit state shown in FIG. 20A. To be specific, a current flowing through the generator winding *N*_{*U*171} is *I*_{*U*171} + *I*_{*DC*4}/3, a current flowing through the generator winding *N*_{*V*171} is *I*_{*V*171} *+ I*_{*DC*4}/3, and a current flowing through the generator winding *N*_{*W*171} is *I*_{*W*171} *+ I*_{*DC*4}/3, where *I*_{*U*171} + *I*_{*V*171} + *I*_{*W*171} = 0. In this case, the generator *M*₁₇₁ outputs a torque, and the three generator windings are in an energy storage stage.

In this case, a sum of currents of the three motor windings of the motor *M*₁₇₂ is still zero. For example, in FIG. 20B, the switching transistor *Q*₁₇₀₂, the switching transistor *Q*₁₇₀₄, and the switching transistor *Q*₁₇₀₆ are turned on, and the switching transistor *Q*₁₇₀₁, the switching transistor *Q*₁₇₀₃, and the switching transistor *Q*₁₇₀₅ are turned off. In this circuit state, *I*_{*U*172} + *I*_{*V*172} + *I*_{*W*172} = 0. In this case, the three motor windings are also in an energy storage stage.

To sum up, the preset target value *V*₃ is subtracted from second modulated signals of the three bridge arms. To be specific, the three bridge arms in the GCU are reused for discharge control of the power battery. In this embodiment of this application, turn-on time and turn-off time of a switching transistor corresponding to a third bridge arm are changed, to enable the generator to generate power and the power battery to discharge at the same time. To be specific, the generator system can implement both a function of a boost converter and a function of an AC/DC converter. In this case, it can be understood that the discharge current of the power battery BAT17 flows through each generator winding. To be specific, when the temperature of the electric drive system 1702 is greater than the second preset temperature, heat generated by the discharge current of the power battery BAT17 is carried by the generator system 1701, to avoid overheating of the electric drive system 1702.

Optionally, in some feasible implementations, the preset target value *V*₃ (not shown in the figure) may be subtracted from a second modulated signal/second modulated signals of one or two of the three first bridge arms. To be specific, one or two bridge arms may be reused for discharge control of the power battery. For example, the powertrain reuses one bridge arm. That the powertrain sends the first discharge reuse control signal to the generator system 1701 is specifically sending the signal PWM1_*Q*₄₀₇ obtained after the moment t9 to the switching transistor *Q*₁₇₀₇, sending the signal PWM1_*Q*₄₀₉ obtained before the moment t9 to the switching transistor *Q*₁₇₀₉, and sending the signal PWM1_*Q*₄₁₁ obtained before the moment t9 to the switching transistor *Q*₁₇₁₁. In this case, the circuit states in FIG. 20A and FIG. 20B may still be formed, the generator *M*₁₇₂ generates power, and the power battery BAT17 is in the discharge state.

Optionally, in some feasible implementations, the powertrain monitors a vehicle speed, and when the vehicle speed increases to a preset speed threshold and the temperature of the electric drive system 1702 is greater than the second preset temperature, if the remaining power of the power battery BAT17 is greater than or equal to the first preset power, the powertrain performs step S1103a. In this case, the vehicle speed is high, and the power battery BAT17 and the generator *M*₁₇₁ jointly drive the motor *M*₁₇₂,

Optionally, in some feasible implementations, the generator *M*₁₇₂ may not output a torque, and the power battery BAT17 is in the discharge state. For example, in this case, the power battery BAT17 outputs a voltage between the positive bus BUS17+ and the negative bus BUS17-. In this case, the power battery may provide a drive voltage for the motor *M*₁₇₂, to enable the motor *M*₁₇₁ to output a torque.

In this case, the powertrain may determine at least one first/fourth bridge arm from the three bridge arms in the GCU 17011, and determine a second PWM signal of each first bridge arm based on the bus voltage and the voltage of the power battery BAT17.

It can be understood that, for a specific implementation of determining, by the powertrain, the second PWM signal based on the bus voltage and the voltage of the power battery BAT17, reference may be made to a manner of determining a control signal of a switching transistor in an existing boost converter. Details are not described herein.

S1103b: The powertrain sends a second charge reuse control signal to the generator system 1701, and sends a second drive control signal to the electric drive system 1702. In this case, the powertrain is in a generator system charge reuse mode of the generator system reuse mode.

For example, the second charge reuse control signal may be specifically shown in FIG. 14. To be specific, that the powertrain sends the second charge reuse control signal to the generator system 1701 is specifically sending the signal PWM_*Q*₁₇₀₇ obtained after the moment t13 to the switching transistor *Q*₁₇₀₇, sending the signal PWM_*Q*₁₇₀₉ obtained after the moment t13 to the switching transistor *Q*₁₇₀₉, and sending the signal PWM_*Q*₁₇₁₁ obtained after the moment t13 to the switching transistor *Q*₁₇₁₁.

The powertrain sends the second drive control signal to the electric drive system 1702, where the second drive control signal may be determined based on an operation parameter of the motor *M*₁₇₂ and the bus voltage. For a specific implementation, refer to a manner of controlling driving of an existing motor. Details are not described herein.

For example, the second drive control signal may be the same as the first drive control signal. To be specific, when the power battery BAT17 is in a charge state or the discharge state, the generator system 1701 outputs same power between the positive bus BSU17+ and the negative bus BUS17-. Alternatively, the second drive control signal is different from the first drive control signal, a rotational speed of the motor *M*₁₇₂ under the control of the first drive control signal is less than a rotational speed of the motor *M*₁₇₂ under the control of the second drive control signal.

In this case, the generator system 1701 generates power, the generator system 1701 charges the power battery BAT17, and a fourth bus voltage is output between the positive bus BUS17+ and the negative bus BUS17-. The MCU 17021 drives, based on the fourth bus voltage, the generator *M*₁₇₂ to output a torque. That is, the generator system 1701 provides both a drive voltage for the motor *M*₁₇₂ and a charge voltage for the power battery BAT17. In this case, a third bridge arm and a generator winding connected to the third bridge arm can ensure a power generation function of the generator system, to be specific, can implement a function of an AC/DC converter. In addition, a first bridge arm and a generator winding connected to the first bridge arm can implement a function of a DC/DC converter, and specifically, implement a buck function of the DC/DC converter, that is, a buck converter.

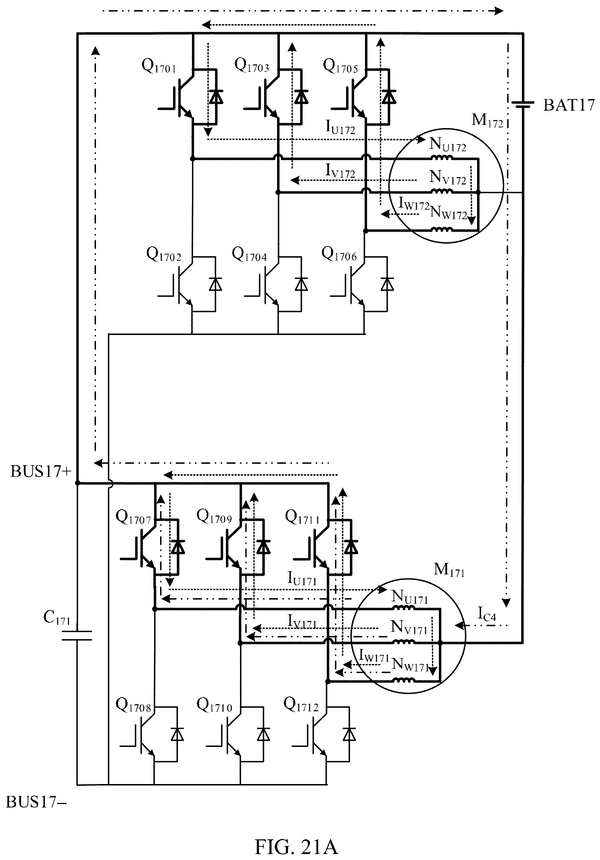

For example, a time period between the moment t13 and a moment t14 is used as an example. In this case, all of the signal PWM_*Q*₄₀₇, the signal PWM_*Q*₄₀₉, and the PWM_*Q*₄₁₁ are at a high level. To be specific, the switching transistor *Q*₁₇₀₇, the switching transistor *Q*₁₇₀₉, and the switching transistor *Q*₁₇₁₁ are turned on, and the switching transistor *Q*₁₇₀₈ , the switching transistor *Q*₁₇₁₀, and the switching transistor *Q*₁₇₁₂ are turned off. The powertrain may form a circuit state shown in FIG. 21A. As shown in FIG. 21A, assuming that three generator windings have same inductive reactance, a current flowing through the generator winding *N*_{*U*171} is *I*_{*U*171} + *I*_{*C*4}/3, a current flowing through the generator winding *N*_{*V*171} is *I*_{*V*171} + *I*_{*C*4}/3, and a current flowing through the generator winding *N*_{*W*171} is *I*_{*W*171} + *I*_{*C*4}/3, where *I*_{*U*171} + *I*_{*V*171} *+ I*_{*W*171} = 0. In this case, the generator *M*₁₇₁ outputs a torque, and the generator system 1701 charges the power battery BAT17 through the generator winding *N*_{*U*171}*,* the generator winding *N*_{*V*171}, and the generator winding *N*_{*W*171}. That is, the power battery BAT17 is in a charge state. A charge current is *I*_{*C*4}.

In this case, the powertrain sends the second drive control signal to the electric drive system 1702, a sum of currents of the three motor windings of the motor *M*₁₇₂ is zero, and the motor *M*₁₇₂ generates power. For example, in FIG. 21A, the lower switching transistor *Q*₁₇₀₂, the lower switching transistor *Q*₁₇₀₄, and the lower switching transistor *Q*₁₇₀₆ are turned off, and the upper switching transistor *Q*₁₇₀₁, the upper switching transistor *Q*₁₇₀₃, and the upper switching transistor *Q*₁₇₀₅ are turned on. A current generated by the motor *M*₁₇₂ for power generation flows in from the motor winding *N*_{*U*172}, and flows out from the motor winding *N*_{*V*172} and the motor winding *N*_{*W*172} to the positive bus BUS17+ and the negative bus BUS17-. In this circuit state, *I*_{*U*172} + *I*_{*V*172} + *I*_{*W*172} = 0. In this case, the motor *M*₁₇₂ outputs a torque.

It should be noted that the drive current circuit in the electric drive system shown in FIG. 21A should be understood as an example. Because a direction of a current generated when the motor *M*₁₇₂ outputs a torque is random, the current generated by the motor *M*₁₇₂ may flow out from the motor winding *N*_{*U*172}*,* flow in from the motor winding *N*_{*V*172}*,* and flow in from the motor winding *N*_{*W*172}. Regardless of how a direction of a current of each motor winding changes, when the motor *M*₁₇₂ generates power, a sum of currents of the three motor windings is zero, that is, *I*_{*U*172} + *I*_{*V*172} + *I*_{*W*172} = 0.

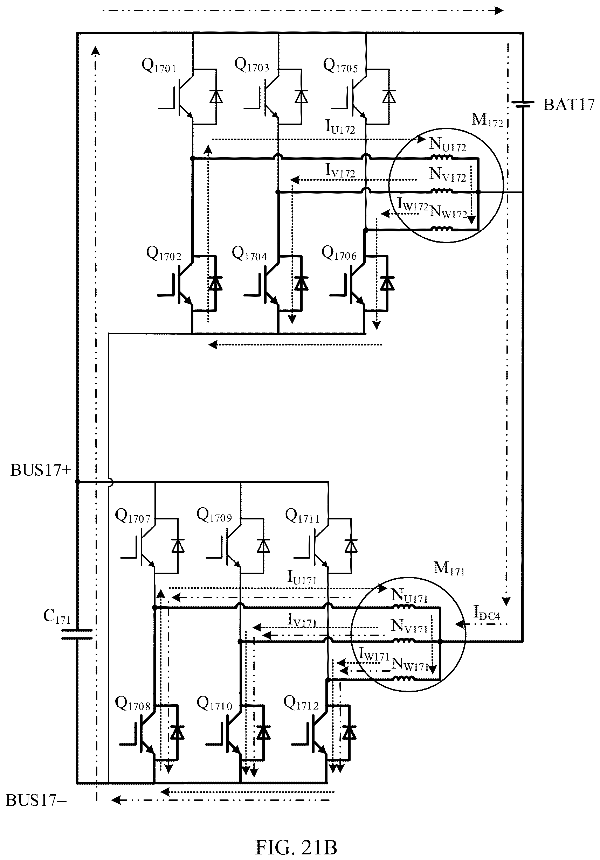

Within a time period between a moment t15 and a moment t16, in this case, all of the signal PWM_*Q*₄₀₇, the signal PWM_*Q*₄₀₉, and the signal PWM_*Q*₄₁₁ are at a low level. To be specific, the upper switching transistor *Q*₁₇₀₇, the upper switching transistor *Q*₁₇₀₉, and the upper switching transistor *Q*₁₇₁₁ are turned off, and the lower switching transistor *Q*₁₇₀₈, the lower switching transistor *Q*₁₇₁₀ , and the lower switching transistor *Q*₁₇₁₂ are turned on. The powertrain may form a circuit state shown in FIG. 21B. As shown in FIG. 21B, currents of the generator windings cannot change abruptly, and directions of currents of the three generator windings are still the directions of the currents in the circuit state shown in FIG. 21A. To be specific, a current flowing through the generator winding *N*_{*U*171} is *I*_{*U*171} + *I*_{*C*4}/3, a current flowing through the generator winding *N*_{*V*171} is *I*_{*V*171} + *I*_{*C*4}/3, and a current flowing through the generator winding *N*_{*W*171} is *I*_{*W*171} *+ I*_{*C*4}/3, where *I*_{*U*171} + *I*_{*V*171} *+ I*_{*W*171} = 0. In this case, the generator *M*₁₇₁ outputs a torque, and the three generator windings are in an energy storage stage.

In this case, a sum of currents of the three motor windings of the motor *M*₁₇₂ is still zero. For example, in FIG. 21B, the lower switching transistor *Q*₁₇₀₂, the lower switching transistor *Q*₁₇₀₄, and the lower switching transistor *Q*₁₇₀₆ are turned on, and the upper switching transistor *Q*₁₇₀₁, the upper switching transistor *Q*₁₇₀₃, and the upper switching transistor *Q*₁₇₀₅ are turned off. In this circuit state, *I*_{*U*172} + *I*_{*V*172} + *I*_{*W*172} = 0. In this case, the three motor windings are also in an energy storage stage.

To sum up, the preset target value *V*₄ is superposed on second modulated signals of the three bridge arms. To be specific, the three bridge arms in the GCU are reused for charge control of the power battery. In this embodiment of this application, turn-on time and turn-off time of a switching transistor corresponding to a first bridge arm are changed, to enable the generator to generate power, and charge the power battery at the same time. To be specific, the generator system can implement both a function of an AC/DC converter and a function of a buck converter. In this case, it can be understood that the charge current of the power battery BAT17 flows through each generator winding. To be specific, when the temperature of the electric drive system 1702 is greater than first preset temperature, heat generated by the charge current of the power battery BAT17 is carried by the generator system 1701, to avoid overheating of the electric drive system 1702.

Optionally, in some feasible implementations, the preset target value *V*₄ (not shown in the figure) may be superposed on a second modulated signal/second modulated signals of one first bridge arm or two second bridge arms of the three bridge arms. To be specific, one or two bridge arms may be reused for charge control of the power battery. For example, the powertrain reuses one bridge arm. That the powertrain sends the second charge reuse control signal to the generator system 1701 may be specifically sending the signal PWM1_*Q*₄₀₇ obtained after the moment t13 to the upper switching transistor *Q*₁₇₀₇, sending the signal PWM1_*Q*₄₀₉ obtained before the moment t13 to the upper switching transistor *Q*₄₀₉, and sending the signal PWM1_*Q*₄₁₁ obtained before the moment t13 to the switching transistor *Q*₄₁₁. In this case, the circuit states in FIG. 21A and FIG. 21B may still be formed, the generator *M*₁₇₁ generates power, and the power battery BAT17 is in the charge state.

It should be noted that the terms "first" and "second" are merely intended for description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A powertrain, wherein the powertrain comprises a generator system, an electric drive system, and a bus capacitor, wherein
the generator system comprises three first bridge arms connected in parallel and a generator, two ends of each first bridge arm are used to respectively connect to two ends of the bus capacitor, and a bridge arm midpoint of each first bridge arm is used to connect to a three-phase winding of the generator;
the electric drive system comprises three second bridge arms connected in parallel and a motor, two ends of each second bridge arm are used to respectively connect to the two ends of the bus capacitor, and a bridge arm midpoint of each second bridge arm is used to connect to a three-phase winding of the motor; and
a center tap point of the three-phase winding of the generator and a center tap point of the three-phase winding of the motor are used to connect to one end of a power battery, and the other end of the power battery is connected to the bus capacitor.

2. The powertrain according to claim 1, wherein the powertrain is configured to control, based on that temperature of the generator system is greater than first preset temperature, an upper switching transistor and a lower switching transistor in each second bridge arm to be turned off or alternately turned on, to control a current of the three-phase winding of the motor to comprise a drive current of the motor and a charge/discharge current of the power battery.

3. The powertrain according to claim 2, wherein the powertrain is configured to control, based on that the temperature of the generator system is greater than the first preset temperature and remaining power of the power battery is greater than or equal to first preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor and the discharge current of the power battery; and
an upper switching transistor and a lower switching transistor in each first bridge arm are controlled to be turned off or alternately turned on, to control a current of the three-phase winding of the generator to comprise a power generation current of the generator.

4. The powertrain according to claim 2 or 3, wherein the powertrain is configured to control, based on that the temperature of the generator system is greater than the first preset temperature, a vehicle speed increases to a preset speed threshold, and the remaining power of the power battery is greater than or equal to the first preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor and the discharge current of the power battery; and
the upper switching transistor and the lower switching transistor in each first bridge arm are controlled to be turned off or alternately turned on, to control the current of the three-phase winding of the generator to comprise the power generation current of the generator.

5. The powertrain according to claim 2 or 3, wherein the powertrain is configured to control, based on that the temperature of the generator system is greater than the first preset temperature and the remaining power of the power battery is less than second preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor and the charge current of the power battery; and
the upper switching transistor and the lower switching transistor in each first bridge arm are controlled to be turned off or alternately turned on, to control the current of the three-phase winding of the generator to comprise the power generation current of the generator.

6. The powertrain according to any one of claims 1 to 5, wherein the powertrain is configured to control, based on that temperature of the electric drive system is greater than second preset temperature, the upper switching transistor and the lower switching transistor in each first bridge arm to be turned off or alternately turned on, to control the current of the three-phase winding of the generator to comprise the power generation current of the generator and the charge/discharge current of the power battery.

7. The powertrain according to claim 6, wherein the powertrain is configured to control, based on that the temperature of the electric drive system is greater than the second preset temperature and the remaining power of the power battery is greater than or equal to the first preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor; and
the upper switching transistor and the lower switching transistor in each first bridge arm are controlled to be turned off or alternately turned on, to control the current of the three-phase winding of the generator to comprise the power generation current of the generator and the discharge current of the power battery.

8. The powertrain according to claim 6 or 7, wherein the powertrain is configured to control, based on that the temperature of the electric drive system is greater than the second preset temperature, the vehicle speed increases to the preset speed threshold, and the remaining power of the power battery is greater than or equal to the first preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor; and
the upper switching transistor and the lower switching transistor in each first bridge arm are controlled to be turned off or alternately turned on, to control the current of the three-phase winding of the generator to comprise the power generation current of the generator and the discharge current of the power battery.

9. The powertrain according to claim 6 or 7, wherein the powertrain is configured to control, based on that the temperature of the electric drive system is greater than the second preset temperature and the remaining power of the power battery is less than second preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor; and
the upper switching transistor and the lower switching transistor in each first bridge arm are controlled to be turned off or alternately turned on, to control the current of the three-phase winding of the generator to comprise the power generation current of the generator and the charge current of the power battery.

10. A controller for controlling a powertrain, wherein the powertrain comprises a generator system, an electric drive system, and a bus capacitor, the generator system comprises three first bridge arms connected in parallel and a generator, two ends of each first bridge arm are used to respectively connect to two ends of the bus capacitor, a bridge arm midpoint of each first bridge arm is used to connect to a three-phase winding of the generator, the electric drive system comprises three second bridge arms connected in parallel and a motor, two ends of each second bridge arm are used to respectively connect to the two ends of the bus capacitor, a bridge arm midpoint of each second bridge arm is used to connect to a three-phase winding of the motor, a center tap point of the three-phase winding of the generator and a center tap point of the three-phase winding of the motor are used to connect to one end of a power battery, the other end of the power battery is connected to the bus capacitor, and the controller is configured to:
control, based on that temperature of the generator system is greater than first preset temperature, an upper switching transistor and a lower switching transistor in each second bridge arm to be turned off or alternately turned on, to control a current of the three-phase winding of the motor to comprise a drive current of the motor and a charge/discharge current of the power battery.

11. The controller according to claim 10, wherein the controller is further configured to:
control, based on that the temperature of the generator system is greater than the first preset temperature and remaining power of the power battery is greater than or equal to first preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor and the discharge current of the power battery; and
an upper switching transistor and a lower switching transistor in each first bridge arm are controlled to be turned off or alternately turned on, to control a current of the three-phase winding of the generator to comprise a power generation current of the generator.

12. The controller according to claim 10 or 11, wherein the controller is further configured to:
control, based on that the temperature of the generator system is greater than the first preset temperature, a vehicle speed increases to a preset speed threshold, and the remaining power of the power battery is greater than or equal to the first preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor and the discharge current of the power battery; and
the upper switching transistor and the lower switching transistor in each first bridge arm are controlled to be turned off or alternately turned on, to control the current of the three-phase winding of the generator to comprise the power generation current of the generator.

13. The controller according to claim 10 or 11, wherein the controller is further configured to:
control, based on that the temperature of the generator system is greater than the first preset temperature and the remaining power of the power battery is less than second preset power, each second bridge arm and each first bridge arm to act, wherein
the upper switching transistor and the lower switching transistor in each second bridge arm are controlled to be turned off or alternately turned on, to control the current of the three-phase winding of the motor to comprise the drive current of the motor and the charge current of the power battery; and
the upper switching transistor and the lower switching transistor in each first bridge arm are controlled to be turned off or alternately turned on, to control the current of the three-phase winding of the generator to comprise the power generation current of the generator.

14. The controller according to any one of claims 10 to 13, wherein the controller is further configured to:
control, based on that temperature of the electric drive system is greater than second preset temperature, the upper switching transistor and the lower switching transistor in each first bridge arm to be turned off or alternately turned on, to control the current of the three-phase winding of the generator to comprise the power generation current of the generator and the charge/discharge current of the power battery.

15. A hybrid electric vehicle, wherein the hybrid electric vehicle comprises:
a power battery and the powertrain according to any one of claims 1 to 9; or three first bridge arms connected in parallel, a generator connected to the three first bridge arms, three second bridge arms connected in parallel, a motor connected to the three second bridge arms, and the controller according to any one of claims 10 to 14.
